# EUROPEAN PATENT SPECIFICATION

(11) **EP 2 970 686 B1**
(45) Date of publication and mention of the grant of the patent: **22.11.2017**
(21) Application number: 14714001.6
(22) Date of filing: 05.03.2014
(51) Int. Cl.: C09D 5/00

(54) **COATINGS THAT EXHIBIT A TRI-COAT APPEARANCE, RELATED COATING METHODS AND SUBSTRATES**
BESCHICHTUNGEN MIT DREIFACHBESCHICHTUNGSERSCHEINUNGSBILD, ZUGEHÖRIGE BESCHICHTUNGSVERFAHREN UND SUBSTRATE
REVÊTEMENTS QUI PRÉSENTENT UN ASPECT TRI-COUCHE, PROCÉDÉS DE REVÊTEMENT ET SUBSTRATS ASSOCIÉS

(30) Priority: 11.03.2013 US 201313792269
(43) Date of publication of application: 20.01.2016
(73) Proprietor: PPG Industries Ohio, Inc., Cleveland, OH 44111 (US)
(72) Inventor: EIBON, William E., Elyria, Ohio 44035 (US); DILLON, Brian, North Olmsted, Ohio 44070 (US)
(74) Representative: f & e patent
(86) International application number: PCT/US2014/020596
(87) International publication number: WO 2014/164105

(56) References cited:
- EP-A1- 1 331 249
- WO-A1-01/29137
- WO-A2-2005/007758
- DE-A1- 10 343 704
- US-A1- 2003 059 598
- US-A1- 2003 060 538

## Description

### FIELD

The present invention relates to coating compositions that form coatings having the appearance of a tri-coat coating system in fewer than three coating layers. The present invention also relates to methods of coating a substrate and related coated substrates.

### BACKGROUND

In automotive and other end use applications, three coating layer systems (often referred to as "tri-coat" systems) are sometimes used to provide coated substrates that have unique and pleasing appearance attributes.

To achieve such attributes, "tri-coat" systems use a first colored and opaque coating layer, a second colored, but translucent (i.e., non-opaque) coating layer deposited over at least a portion of the first coating layer, and a clear, typically colorless, topcoat layer deposited over at least a portion of the first coating layer and the second coating layer. The second coating layer sometimes includes effect pigments and/or nanopigments (nanopigments referring to pigment particles having a primary particles sixe typically of less than 300 nanometers in which the pigment particles are substantially prevented from agglomerating with each other) to provide a colored, translucent coating that exhibits gonio-apparent properties, which means that the coating exhibits the property of angle-dependent color change, *i.e.,* the color changes upon variation of the angle of incident light, or as the viewing angle of the observer is shifted.

There are several drawbacks associated with current "tri-coat" systems. First is quality. These coating systems often suffer from excessive color variation due to film thickness variation among various coating layers. Second, tri-coat systems often require additional capital equipment, processing steps, and quality control steps that add cost and time to the painting process. As a result, articles exhibiting the desirable appearance of a tri-coat system are often sold at a premium cost.

Thus, it would be desirable to provide coating compositions that can provide the appearance of a tri-coat system in fewer coating layers.

### SUMMARY OF THE INVENTION

In certain respects, the present invention is directed to a process for forming a multilayer composite coating on a substrate, comprising:
(a) depositing an opaque coating layer directly over at least a portion of an electrodeposition coating layer and/or a primer-surfacer coating layer by depositing a coating composition comprising:
   (i) a resinous binder, and
   (ii) a pigment composition, wherein the pigment composition comprises:
      (1) colored inorganic pigment particles selected from blue inorganic pigment particles, green inorganic pigment particles, brown inorganic pigment particles, turquoise inorganic pigment particles, and white inorganic pigment particles;
      (2) metal and/or metal alloy flake pigment particles; and
      (3) interference pigment particles;
(b) optionally, dehydrating the opaque coating layer;
(c) forming a top coating layer over the opaque coating layer by depositing a curable top coating composition which is substantially pigment-free directly onto at least a portion of the opaque coating layer; and
(d) optionally curing the top coating layer and the opaque coating layer simultaneously, wherein the pigment composition comprises:
   I
      (1) 27 to 67 percent by weight of blue inorganic pigment particles;
      (2) up to 40 percent by weight of metal and/or metal alloy flake pigment particles; and
      (3) up to 40 percent by weight of interference pigment particles,
      wherein the pigment composition comprises at least 8 percent by weight of (2) and/or (3); or
   II
      (1) 20 to 92.5 percent by weight of green inorganic pigment particles;
      (2) up to 40 percent by weight of metal and/or metal alloy flake pigment particles; and
      (3) 7.5 up to 40 percent by weight of interference pigment particles; or
   III
      (1) 43.5 to 94.5 percent by weight of green inorganic pigment particles;
      (2) 13.3 to 40 percent by weight of titanium dioxide coated glass flake pigment particles; and/or
      (3) 5.5 to 31.4 percent by weight of aluminum coated glass flake pigment particles,
      wherein the pigment composition comprises no more than 56.5 percent by weight of (2) and (3) combined; or
   IV
      (1) 29.3 to 90.3 percent by weight of brown inorganic pigment particles;
      (2) 9.5 to 40 percent by weight of metal and/or metal alloy flake pigment particles; and
      (3) up to 30.7 percent by weight of interference pigment particles,
      wherein the pigment composition comprises at least 9.7 percent by weight of (2) and (3) combined; or
   V
      (1) 52 to 75 percent by weight of turquoise inorganic pigment particles;
      (2) 25 to 40 percent by weight of metal and/or metal alloy flake pigment particles; and
      (3) up to 31.5 percent by weight of interference pigment particles,
      wherein the pigment composition comprises at least 34.2 percent by weight of (2) and (3) combined; or
   VI
      (1) 27 to 88.5 percent by weight of white inorganic pigment particles;
      (2) 7.5 to 40 percent by weight of metal and/or metal alloy flake pigment particles; and
      (3) up to 31 percent by weight of interference pigment particles,
      wherein the pigment composition comprises 11.5 to 74 percent by weight of (2) and (3) combined and
   wherein each weight percent is based on the total weight of pigment present in the coating composition.

In other respects, the present invention is directed to a coating composition comprising a resinous binder and a pigment composition, comprising
(1) colored inorganic pigment particles selected from blue inorganic pigment particles, green inorganic pigment particles, brown inorganic pigment particles, turquoise inorganic pigment particles, and white inorganic pigment particles;
(2) metal and/or metal alloy flake pigment particles; and
(3) interference pigment particles;
wherein the pigment composition is selected from:
(a) a composition comprising:
   (i) 27 to 67 percent by weight of blue inorganic pigment particles;
   (ii) up to 40 percent by weight of metal and/or metal alloy flake pigment particles; and
   (iii) up to 40 percent by weight of interference pigment particles,
      wherein the pigment composition comprises at least 8 percent by weight of (ii) and/or (iii); and
      wherein each weight percent is based on the total weight of pigment present in the coating composition;
(b) a composition comprising:
   (i) 20 to 92.5 percent by weight of green inorganic pigment particles;
   (ii) up to 40 percent by weight of metal and/or metal alloy flake pigment particles; and
   (iii) up to 40 percent by weight of interference pigment particles, wherein the pigment composition comprises at least 7.5 percent by weight of (iii); and
      wherein each weight percent is based on the total weight of pigment present in the coating composition;
(c) a composition comprising:
   (i) 43.5 to 94.5 percent by weight of green inorganic pigment particles;
   (ii) 13.3 to 40 percent by weight of titanium dioxide coated glass flake pigment particles; and/or
   (iii) 5.5 to 31.4 percent by weight of aluminum coated glass flake pigment particles,
      wherein the pigment composition comprises no more than 56.5 percent by weight of (ii) and (iii) combined, and
      wherein each weight percent is based on the total weight of pigment present in the coating composition;
(d) a composition comprising:
   (i) 29.3 to 90.3 percent by weight of brown inorganic pigment particles;
   (ii) 9.5 to 40 percent by weight of metal and/or metal alloy flake pigment particles; and
   (iii) up to 30.7 percent by weight of interference pigment particles,
      wherein the pigment composition comprises at least 9.7 percent by weight of (ii) and (iii) combined, and
      wherein each weight percent is based on the total weight of pigment present in the coating composition;
(e) a composition comprising:
   (i) 52 to 75 percent by weight of turquoise inorganic pigment particles;
   (ii) 25 to 40 percent by weight of metal and/or metal alloy flake pigment particles; and
   (iii) up to 31.5 percent by weight of interference pigment particles,
      wherein the pigment composition comprises at least 34.2 percent by weight of (ii) and (iii) combined, and
      wherein each weight percent is based on the total weight of pigment particles present in the coating composition; and
(f) a composition comprising:
   (i) 27 to 88.5 percent by weight of white inorganic pigment particles;
   (ii) 7.5 to 40 percent by weight of metal and/or metal alloy flake pigment particles; and
   (iii) up to 31 percent by weight of interference pigment particles,
      wherein the pigment composition comprises 11.5 to 74 percent by weight of (ii) and (iii) combined, and
      wherein each weight percent is based on the total weight of pigment present in the coating composition.

The present invention is also directed to, among other things, related coated substrates.

### DETAILED DESCRIPTION

For purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

As indicated above, certain embodiments of the present invention are directed to processes for forming a multilayer composite coating on a substrate. Useful substrates that can be coated according to the processes described herein include metallic substrates, polymeric substrates, such as thermoset materials and thermoplastic materials, and combinations thereof. Suitable substrates include electroconductive substrates, including various metallic substrates, such as ferrous metals and non-ferrous metals. Suitable ferrous metals include iron, steel, and alloys thereof. Non-limiting examples of useful steel materials include cold-rolled steel, galvanized (i.e., zinc coated) steel, electrogalvanized steel, stainless steel, pickled steel, GALVANNEAL®, GALVALUME®, AND GALVAN® zinc-aluminum alloys coated upon steel, and combinations thereof. Useful non-ferrous metals include conductive carbon coated materials, aluminum, copper, zinc, magnesium and alloys thereof. The substrates can be used as components to fabricate automotive vehicles, including but not limited to automobiles, trucks and tractors. The substrates can have any shape, but in some embodiments are in the form of automotive body components such as bodies (frames), hoods, doors, fenders, bumpers and/or trim for automotive vehicles.

In certain embodiments of the processes of the present invention, an electrodeposition coating layer is formed on the substrate by electrodeposition of a curable electrodepositable coating composition over at least a portion of the substrate.

The electrodeposition coating composition can be applied over either bare metal or pretreated and/or primed metal substrates. By "bare metal" is meant a virgin metal substrate that has not been treated with a pretreatment composition such as conventional phosphating solutions, heavy metal rinses and the like. Additionally, for purposes of the present invention, 'bare metal' substrates can include a cut edge of a substrate that is otherwise treated and/or coated over the non-edge surfaces of the substrate.

Before any treatment or application of any coating composition, the substrate optionally may be formed into an object of manufacture. A combination of more than one metal substrate can be assembled together to form such an object of manufacture.

The "substrate" upon which the electrodeposition coating composition is deposited can comprise, for example, any metal substrate, to which one or more pretreatment and/or primer coatings have been previously applied. For example, the "substrate" can comprise a metallic substrate and a weldable primer coating over at least a portion of the substrate surface. The electrodepositable coating composition is then electrodeposited and cured over at least a portion thereof.

For example, the substrate can comprise any electroconductive substrate and a pre-treatment composition applied over at least a portion of the substrate, the pretreatment composition comprising a solution that contains one or more Group IIIB or IVB element-containing compounds, or mixtures thereof, solubilized or dispersed in a carrier medium, typically an aqueous medium. Transition metal compounds and rare earth metal compounds typically are compounds of zirconium, titanium, hafnium, yttrium and cerium and mixtures thereof. Typical zirconium compounds may be selected from hexafluorozirconic acid, alkali metal and ammonium salts thereof, ammonium zirconium carbonate, zirconyl nitrate, zirconium carboxylates and zirconium hydroxy carboxylates such as hydrofluorozirconic acid, zirconium acetate, zirconium oxalate, ammonium zirconium glycolate, ammonium zirconium lactate, ammonium zirconium citrate, and mixtures thereof.

The pretreatment composition carrier also can contain a film-forming resin, for example, the reaction products of one or more alkanolamines and an epoxy-functional material containing at least two epoxy groups, such as those disclosed in U.S. 5,653,823. Other suitable resins include water soluble and water dispersible polyacrylic acids such as those as disclosed in U. S. Patent Nos. 3,912,548 and 5,328,525; phenol-formaldehyde resins as described in U. S. Patent 5,662,746; water soluble polyamides such as those disclosed in WO 95/33869; copolymers of maleic or acrylic acid with allyl ether as described in Canadian patent application 2,087,352; and water soluble and dispersible resins including epoxy resins, aminoplasts, phenol-formaldehyde resins, tannins, and polyvinyl phenols as discussed in U. S. Patent 5,449,415.

Further, non-ferrous or ferrous metallic substrates can be pretreated with a non-insulating layer of organophosphates or organophosphonates such as those described in U.S. Patents No 5,294,265 and 5,306,526. Such organophosphate or organophosphonate pretreatments are available commercially from PPG Industries, Inc. under the trade name NUPAL®. Application to the substrate of a non-conductive coating, such as NUPAL, typically is followed by the step of rinsing the substrate with deionized water prior to the coalescing of the coating. This ensures that the layer of the non-conductive coating is sufficiently thin to be non-insulating, i.e., sufficiently thin such that the non-conductive coating does not interfere with electroconductivity of the substrate, allowing subsequent electrodeposition of a electrodepositable coating composition. The pretreatment coating composition can further comprise surfactants that function as aids to improve wetting of the substrate. Generally, the surfactant materials are present in an amount of less than about 2 weight percent on a basis of total weight of the pretreatment coating composition. Other optional materials in the carrier medium include defoamers and substrate wetting agents.

Due to environmental concerns, the pretreatment coating composition can be free of chromium-containing materials, i.e., the composition contains less than about 2 weight percent of chromium-containing materials (expressed as CrO₃), typically less than about 0.05 weight percent of chromium-containing materials.

In the pre-treatment process, before depositing the pre-treatment composition upon the surface of the metal substrate, it is usual practice to remove foreign matter from the metal surface by thoroughly cleaning and degreasing the surface. The surface of the metal substrate can be cleaned by physical or chemical means, such as by mechanically abrading the surface or cleaning/degreasing with commercially available alkaline or acidic cleaning agents which are well know to those skilled in the art, such as sodium metasilicate and sodium hydroxide. A non-limiting example of a suitable cleaning agent is CHEMKLEEN® 163, an alkaline-based cleaner commercially available from PPG Pretreatment and Specialty Products of Troy, Michigan. Acidic cleaners also can be used. Following the cleaning step, the metal substrate is usually rinsed with water in order to remove any residue. The metal substrate can be air-dried using an air knife, by flashing off the water by brief exposure of the substrate to a high temperature or by passing the substrate between squeegee rolls. The pretreatment coating composition can be deposited upon at least a portion of the outer surface of the metal substrate. Preferably, the entire outer surface of the metal substrate is treated with the pretreatment composition. The thickness of the pretreatment film can vary, but is generally less than about 1 micrometer, preferably ranges from about 1 to about 500 nanometers, and more preferably ranges from about 10 to about 300 nanometers.

The pretreatment composition can be applied to the surface of the substrate by any conventional application technique, such as by spraying, immersion or roll coating in a batch or continuous process. The temperature of the pretreatment composition at application is typically about 10°C to about 85°C, and preferably about 15°C to about 60°C. The pH of the pretreatment coating composition at application generally ranges from 2.0 to 5.5, and typically from 3.5 to 5.5. The pH of the medium may be adjusted using mineral acids such as hydrofluoric acid, fluoroboric acid, phosphoric acid, and the like, including mixtures thereof; organic acids such as lactic acid, acetic acid, citric acid, sulfamic acid, or mixtures thereof; and water soluble or water dispersible bases such as sodium hydroxide, ammonium hydroxide, ammonia, or amines such as triethylamine, methylethyl amine, or mixtures thereof.

Continuous processes typically are used in the coil coating industry and also for mill application. The pretreatment composition can be applied by any of these conventional processes. For example, in the coil industry, the substrate typically is cleaned and rinsed and then contacted with the pretreatment composition by roll coating with a chemical coater. The treated strip is then dried by heating, painted and baked by conventional coil coating processes.

Mill application of the pretreatment composition can be by immersion, spray or roll coating applied to the freshly manufactured metal strip. Excess pretreatment composition is typically removed by wringer rolls. After the pretreatment composition has been applied to the metal surface, the metal can be rinsed with deionized water and dried at room temperature or at elevated temperatures to remove excess moisture from the treated substrate surface and cure any curable coating components to form the pretreatment coating. Alternatively, the treated substrate can be heated to a temperature ranging from 65°C to 125°C for 2 to 30 seconds to produce a coated substrate having a dried residue of the pretreatment coating composition thereon. If the substrate is already heated from the hot melt production process, no post application heating of the treated substrate is required to facilitate drying. The temperature and time for drying the coating will depend upon such variables as the percentage of solids in the coating, components of the coating composition and type of substrate.

The film coverage of the residue of the pretreatment composition generally ranges from 1 to 10,000 milligrams per square meter (mg/m²), and usually from 10 to 400 mg/m².

A layer of a weldable primer also can be applied over the substrate, whether or not the substrate has been pretreated. Non-limiting examples of suitable weldable primers include those described in U.S. Patent Nos. 5,580,371; 5,652,024; 5,584,946; and 3,792,850. The weldable primer can comprise a reactive functional group-containing film-forming polymer, for example a polyepoxide polymer or an acrylic polymer having epoxy functional groups; and a crosslinking agent adapted to react with the functional groups of the film-forming polymer. The weldable primer composition further comprises one or more conductive pigments such as carbon black, present in an amount sufficient to render the cured primer weldable. A typical weldable primer is BONAZINC®, a zinc-rich mill applied organic film-forming composition, which is commercially available from PPG Industries, Inc., Pittsburgh, Pennsylvania. BONAZINC can be applied to a thickness of at least 1 micrometer and typically to a thickness of 3 to 4 micrometers. Other weldable primers, such as iron phosphide-rich primers, are commercially available.

Electrodeposition coating processes can include immersing the electroconductive substrate into an electrodeposition bath of an aqueous electrodepositable composition, the substrate serving as a cathode in an electrical circuit comprising the cathode and an anode. Sufficient electrical current is applied between the electrodes to deposit a substantially continuous, adherent film of the electrodepositable coating composition onto or over at least a portion of the surface of the electroconductive substrate. Also, it should be understood that as used herein, a composition or coating formed "over" at least a portion of a "substrate" refers to a composition formed directly on at least a portion of the substrate surface, as well as a composition or coating formed over any coating or pretreatment material which was previously applied to at least a portion of the substrate. Electrodeposition is usually carried out at a constant voltage in the range of from 1 volt to several thousand volts, typically between 50 and 500 volts. Current density is usually between 1.0 ampere and 15 amperes per square foot (10.8 to 161.5 amperes per square meter) and tends to decrease quickly during the electrodeposition process, indicating formation of a continuous, self-insulating film.

Once the electrodepositable coating composition is applied as described above, thereby forming an electrodeposition coating layer over the substrate, the electrodeposition coating layer, optionally, is heated to a temperature and for a time sufficient to cure the electrodeposition coating layer. The coated substrate can be heated to a temperature ranging from 250° to 450°F (121.1° to 232.2°C), often from 250° to 400°F (121.1° to 204.4°C), and typically from 300° to 360° (148.9° to 180°C). The curing time can be dependent upon the curing temperature as well as other variables, for example, film thickness of the electrodeposited coating, level and type of catalyst present in the composition and the like. For example, the curing time can range from 10 minutes to 60 minutes, and typically from 10 to 30 minutes. The thickness of the resultant cured electrodeposited coating usually ranges from 15 to 50 microns.

As used herein, the term "cure" as used in connection with a composition, e.g., "a cured composition," shall mean that any crosslinkable components of the composition are at least partially crosslinked. In certain embodiments of the present invention, the crosslink density of the crosslinkable components, i.e., the degree of crosslinking, ranges from 5% to 100% of complete crosslinking. In other embodiments, the crosslink density ranges from 35% to 85% of full crosslinking. In other embodiments, the crosslink density ranges from 50% to 85% of full crosslinking. One skilled in the art will understand that the presence and degree of crosslinking, i.e., the crosslink density, can be determined by a variety of methods, such as dynamic mechanical thermal analysis (DMTA) using a TA Instruments DMA 2980 DMTA analyzer conducted under nitrogen. This method determines the glass transition temperature and crosslink density of free films of coatings or polymers. These physical properties of a cured material are related to the structure of the crosslinked network.

The electrodepositable coating composition can be any of the anionic or cationic electrodepositable coating compositions well known in the art. Electrodepositable cationic compositions are typically used in the electrocoating of metallic motor vehicle or automotive substrates.

Electrodepositable coating compositions usually comprise a resinous phase dispersed in an aqueous medium, the resinous phase comprising (a) an ungelled, active hydrogen group-containing ionic resin, and (b) a curing agent having functional groups reactive with the active hydrogen groups of (a). Such electrodepositable coating compositions typically are in the form of an electrodeposition bath.

By "ungelled" is meant the resins are substantially free of crosslinking and have an intrinsic viscosity when dissolved in a suitable solvent, as determined, for example, in accordance with ASTM-D1795 or ASTM-D4243. The intrinsic viscosity of the reaction product is an indication of its molecular weight. A gelled reaction product, on the other hand, since it is of essentially infinitely high molecular weight, will have an intrinsic viscosity too high to measure. As used herein, a reaction product that is "substantially free of crosslinking" refers to a reaction product that has a weight average molecular weight (Mw), as determined by gel permeation chromatography, of less than 1,000,000.

The term "active hydrogen" refers to those groups which are reactive with isocyanates as determined by the Zerewitnoff test as is described in the JOURNAL OF THE AMERICAN CHEMICAL SOCIETY, Vol. 49, page 3181 (1927). For example, the active hydrogens can be derived from hydroxyl groups, primary amine groups and/or secondary amine groups.

Examples of film-forming resins suitable for use in anionic electrodeposition bath compositions are base-solubilized, carboxylic acid containing polymers such as the reaction product or adduct of a drying oil or semi-drying fatty acid ester with a dicarboxylic acid or anhydride; and the reaction product of a fatty acid ester, unsaturated acid or anhydride and any additional unsaturated modifying materials which are further reacted with polyol. Also suitable are the at least partially neutralized interpolymers of hydroxy-alkyl esters of unsaturated carboxylic acids, unsaturated carboxylic acid and at least one other ethylenically unsaturated monomer. Still another suitable electrodepositable resin comprises an alkyd-aminoplast vehicle, i.e., a vehicle containing an alkyd resin and an amine-aldehyde resin. Yet another anionic electrodepositable resin composition comprises mixed esters of a resinous polyol. These compositions are described in detail in U.S. Pat. No. 3,749,657 at col. 9, lines 1 to 75 and col. 10, lines 1 to 13. Other acid functional polymers can also be used such as phosphatized polyepoxide or phosphatized acrylic polymers as are well known to those skilled in the art. Exemplary phosphatized polyepoxides are disclosed in U.S. Patent Application Publication No. 2009-0045071 at [0004]-[0015] and U.S. Patent Application Serial No. 13/232,093 at [0014]-[0040]. Also suitable are those resins comprising one or more pendent carbamate functional groups, such as those described in United States Patent No. 6,165,338.

Cationic polymers suitable for use in the electrodepositable coating compositions can include any of a number of cationic polymers well known in the art so long as the polymers are "water dispersible," i.e., adapted to be solubilized, dispersed or emulsified in water. Such polymers comprise cationic functional groups to impart a positive charge.

Suitable examples of cationic film-forming resins include amine salt group-containing resins such as the acid-solubilized reaction products of polyepoxides and primary or secondary amines such as those described in U.S. Pat. Nos. 3,663,389; 3,984,299; 3,947,338; and 3,947,339. Usually, these amine salt group-containing resins are used in combination with a blocked isocyanate curing agent. The isocyanate can be fully blocked as described in the aforementioned U.S. Pat. No. 3,984,299 or the isocyanate can be partially blocked and reacted with the resin backbone such as described in U.S. Pat. No. 3,947,338. Also, one-component compositions as described in U.S. Pat. No. 4,134,866 and DE-OS No. 2,707,405 can be used as the film-forming resin. Besides the epoxy-amine reaction products, film-forming resins can also be selected from cationic acrylic resins such as those described in U.S. Pat. Nos. 3,455,806 and 3,928,157.

Besides amine salt group-containing resins, quaternary ammonium salt group-containing resins can also be employed. Examples of these resins are those which are formed from reacting an organic polyepoxide with a tertiary amine salt. Such resins are described in U.S. Pat. Nos. 3,962,165; 3,975,346; and 4,001,101. Examples of other cationic resins are ternary sulfonium salt group-containing resins and quaternary phosphonium salt-group containing resins such as those described in U.S. Pat. Nos. 3,793,278 and 3,984,922, respectively. Also, film-forming resins which cure via transesterification such as described in European Application No. 12463 can be used. Further, cationic compositions prepared from Mannich bases such as described in U.S. Pat. No. 4,134,932 can be used.

Most often, the resin (a) is a positively charged resin which contains primary and/or secondary amine groups. Such resins are described in U.S. Pat. Nos. 3,663,389; 3,947,339; and 4,116,900. In U.S. Pat. No. 3,947,339, a polyketimine derivative of a polyamine such as diethylenetriamine or triethylenetetraamine is reacted with a polyepoxide. When the reaction product is neutralized with acid and dispersed in water, free primary amine groups are generated. Also, equivalent products are formed when polyepoxide is reacted with excess polyamines such as diethylenetriamine and triethylenetetraamine and the excess polyamine vacuum stripped from the reaction mixture. Such products are described in U.S. Pat. Nos. 3,663,389 and 4,116,900.

The active hydrogen-containing, ionic electrodepositable resin described above can be present in the electrodeposition baths used in the processes of the present invention in amounts ranging from 1 to 60 percent by weight, often from 5 to 25 based on total weight of the electrodeposition bath.

The resinous phase of the electrodeposition baths suitable for use in the processes of the present invention further comprises (b) a curing agent adapted to react with the active hydrogen groups of the ionic electrodepositable resin (a) described immediately above. Both blocked organic polyisocyanate and aminoplast curing agents are suitable for use in the present invention, although blocked isocyanates typically are used for cathodic electrodeposition.

Aminoplast resins, typically used as the curing agent for anionic electrodeposition, are the condensation products of amines or amides with aldehydes. Examples of suitable amine or amides are melamine, benzoguanamine, urea and similar compounds. Generally, the aldehyde employed is formaldehyde, although products can be made from other aldehydes such as acetaldehyde and furfural. The condensation products contain methylol groups or similar alkylol groups depending on the particular aldehyde employed. Preferably, these methylol groups are etherified by reaction with an alcohol. Various alcohols employed include monohydric alcohols containing from 1 to 4 carbon atoms such as methanol, ethanol, isopropanol, and n-butanol, with methanol being preferred. Aminoplast resins are commercially available from Cytec under the trademark CYMEL and from Solutia under the trademark RESIMENE.

The aminoplast curing agents typically are utilized in conjunction with the active hydrogen containing anionic electrodepositable resin in amounts ranging from about 5 percent to about 60 percent by weight, preferably from about 20 percent to about 40 percent by weight, the percentages based on the total weight of the resin solids in the electrodeposition bath.

Typically, curing agents for use in cathodic electrodeposition include blocked organic polyisocyanates. The polyisocyanates can be fully blocked as described in U. S. Patent No. 3,984,299 column 1 lines 1 to 68, column 2 and column 3 lines 1 to 15, or partially blocked and reacted with the polymer backbone as described in U. S. Patent No. 3,947,338 column 2 lines 65 to 68, column 3 and column 4 lines 1 to 30. By "blocked" is meant that the isocyanate groups have been reacted with a compound so that the resultant blocked isocyanate group is stable to active hydrogens at ambient temperature but reactive with active hydrogens in the film forming polymer at elevated temperatures usually between 90°C and 200°C.

Suitable polyisocyanates include aromatic and aliphatic polyisocyanates, including cycloaliphatic polyisocyanates and representative examples include diphenylmethane-4,4'-diisocyanate (MDI), 2,4- or 2,6-toluene diisocyanate (TDI), including mixtures thereof, p-phenylene diisocyanate, tetramethylene and hexamethylene diisocyanates, dicyclohexylmethane-4,4'-diisocyanate, isophorone diisocyanate, mixtures of phenylmethane-4,4'-diisocyanate and polymethylenepolyphenylisocyanate. Higher polyisocyanates such as triisocyanates can be used, for example, triphenylmethane-4,4',4"-triisocyanate. Isocyanate prepolymers prepared in conjunction with polyols such as neopentyl glycol and trimethylolpropane and with polymeric polyols such as polycaprolactone diols and triols (NCO/OH equivalent ratio greater than 1) can also be used.

The polyisocyanate curing agents typically can be utilized in conjunction with the active hydrogen containing cationic electrodepositable resin in amounts ranging from 5 percent to 60 percent by weight, and typically from 20 percent to 50 percent by weight, the percentages based on the total weight of the resin solids of the electrodeposition bath.

The aqueous electrodepositable coating compositions are in the form of an aqueous dispersion. The term "dispersion" is believed to be a two-phase transparent, translucent or opaque resinous system in which the resin is in the dispersed phase and the water is in the continuous phase. The average particle size of the resinous phase is generally less than 1.0 and usually less than 0.5 microns, preferably less than 0.15 micron.

The concentration of the resinous phase in the aqueous medium is at least 1 and usually from 2 to 60 percent by weight based on total weight of the aqueous dispersion. When the compositions of the present invention are in the form of resin concentrates, they generally have a resin solids content ranging from 20 to 60 percent by weight based on weight of the aqueous dispersion.

In certain embodiments of the present invention, the electrodepositable coating composition is a photodegradation-resistant composition comprising a polymer comprising cationic amine salt groups which are derived from pendant and/or terminal amino groups that are disclosed in United States Patent Application Publication 2003/0054193 A1 at [0064] to [0088]. Also suitable are the active hydrogen-containing, cationic salt group-containing resins derived from a polyglycidyl ether of a polyhydric phenol that is essentially free of aliphatic carbon atoms to which are bonded more than one aromatic group, which are described in United States Patent Application Publication US 2003/0054193 A1 at [0096] to [0123].

Any of the electrodepositable coating compositions typically further comprise other optional ingredients. For example, the resinous binder is dispersed in an aqueous media which comprises primarily water. Besides water, the aqueous medium may contain a coalescing solvent, for example, hydrocarbons, alcohols, esters, ethers and ketones. such as isopropanol, butanol, 2-ethylhexanol, isophorone, 2-methoxypentanone, ethylene and propylene glycol and the monoethyl, monobutyl and monohexyl ethers of ethylene glycol. A pigment composition, for example, those described below with reference to the basecoating compositions, and, if desired, various additives such as surfactants, wetting agents or catalysts also can be included in the dispersion. Other ingredients can include corrosion inhibitive materials, for example, rare earth metal compound, such as soluble, insoluble, organic and inorganic salts of rare earth metals such as, inter alia, yttrium, bismuth, zirconium, and tungsten. Also, hindered amine light stabilizers and/or ultraviolet light absorbers can be included in the electrodepositable coating compositions.

In some embodiments, a primer-surfacer coating is applied, cured, and/or sanded prior to application of a coating composition of the present invention (which is described in detail below). In other embodiments, however, a primer-surfacer coating is not applied. In certain embodiments, the primer-surfacer coating composition is applied directly onto at least a portion of an electrodeposited coating such as those described above. The primer-surfacer serves to enhance chip resistance of subsequently applied coatings as well as to ensure good appearance of the coatings. As will be discussed in greater detail below, the additional coating layers (*e.g.,* a opaque coating composition and clearcoat coating composition) can then be applied over the cured primer-surfacer coating. The primer-surfacer coating includes such materials as thermoplastic and/or crosslinking (*e.g*., thermosetting) film-forming resins generally known in the art of organic coating compositions. Suitable primers and primer-surfacer coating compositions include spray applied primers, as are known to those skilled in the art. Examples of suitable primers include several available from PPG Industries, Inc., Pittsburgh, Pa., as DPX-1791, DPX-1804, DSPX-1537, GPXH-5379, OPP-2645, PCV-70118, and 1177-225A.

For example, in certain embodiments, a spray applied primer-surfacer is applied to the electrodeposited coating layer before applying a coating composition of the present invention over the primer-surfacer. In some cases, the electrodeposited coating is deposited from ED-11 electrodepositable coating from PPG Industries Inc. and the primer-surfacer composition is E 730G305 from PPG Industries, Inc, which can be cured for 25 minutes at 165°C (329°F). Another example of a suitable primer-surfacer coating composition that can be utilized in the present invention is the two-package, acrylic urethane primer surfacer known as K200/K201, which is more fully disclosed in U.S. Pat. Nos. 5,239,012 and 5,182,355. The resulting primer-surfacer coating may be sanded with No. 400 grit paper and sealed with DP-40/401, which is a two-component epoxy primer reduced 100 percent by volume with a thinner, DTU 800. The K200/K201, DP-40/401, and DTU 800 are all available from PPG Industries, Inc.

An additional primer-surfacer coating composition that may be utilized in the present invention is that available from PPG Industries, Inc. as E-5584. It is reducible with 2-butoxyethylacetate to a viscosity of 23 seconds as measured with a No. 4 Ford cup. This primer-surfacer coating composition can be sprayed automatically and cured by flashing at ambient conditions for 15 minutes followed by heating for around 30 minutes at around 165°C (325°F) to produce a coating that can have dry film thickness of around 30 microns. The cured coating may be sanded smooth with 500 grit sandpaper. Useful automatic spraying for both the primer-surfacer coating composition is the SPRAYMATION 310160 Automatic Test Panel Spray Unit available from SPRAYMATION Inc. The useable spray gun is a Binks Model 610, with open gun pressure 60 psi (4.22 kg/cm.sup.2) and traverse speed of around 80 rpm.

Another suitable primer-surfacer coating composition that can be utilized in the present invention includes a water dispersed primer-surfacer composition as disclosed in U.S. Pat. No. 4,303,581. This particular primer-surfacer coating composition has (a) 50 to 90 percent of a high molecular addition copolymer of a styrenic monomer with acrylic monomers in latex form, (b) about 5 to 40 percent of a water soluble epoxy ester resin, and (c) about 5 to 20 percent of at least one water soluble or water dispersible aminoplast resin. All percents are based on percent by weight of the total of the binder ingredients.

Another suitable primer-surfacer coating composition that can be utilized in the present invention is the primer-surfacer described in U.S. Pat. Application No.11/773,482.

After the primer-surfacer coating composition has been applied onto the substrate, at least a portion of the primer-surfacer coating composition may be cured using techniques that are known in the art. In some embodiments, the primer-surfacer is cured at temperatures ranging from 140°C to 165°C for a time ranging from 15 to 30 minutes.

In the processes of the present invention, a coating composition of the present invention is applied over at least a portion of the cured primer-surfacer coating composition or, if no primer-surfacer coating composition is used, directly over the electrodeposition coating layer, to form an opaque coating layer. The coating composition of the present invention produces a coating layer that is substantially opaque thereby substantially shielding the underlying coatings from electromagnetic radiation. As used herein, "opaque" meansthat a coating layer has 5 percent or less, in some cases 0.5 percent or less, light transmission as measured at 400 nanometers at a film thickness of 15 micrometers. For purposes of the present invention, the percent light transmission is determined by measuring light transmission of free cured coating films ranging from 14 to 16 micrometers film thickness, using a Perkin-Elmer Lambda 9 scanning spectrophotometer with a 150 millimeter Lap Sphere integrating sphere. Data is collected using Perkin-Elmer UV WinLab software in accordance with ASTM E903, Standard Test Method for Solar Absorbance, Reflectance, and Transmittance of Materials Using Integrating Spheres.

The coating compositions of the present invention from which the opaque coating layer is formed comprise: (a) a resinous phase, and (b) a pigment composition. As used herein, the term "pigment" refers to a substance that imparts color and/or other opacity and/or other visual effect to the composition. In certain embodiments, the coating composition from which the opaque coating layer is formed is a water-borne composition, which, as used herein, means that the solvent or carrier fluid for the coating composition primarily or principally comprises water. For example, in certain embodiments, the carrier fluid is at least 80 weight percent water.

As indicated, the coating compositions of the present invention comprise (i) a resinous binder.

In the coating compositions of the present invention, the resinous binder comprises a polymer, which typically comprises reactive functional groups. The polymer can serve as a main film-forming polymer of the coating composition, it can serve as a pigment grind vehicle, or both.

In certain embodiments, the resinous binder comprises a polymer selected from any of a variety of polymers known in the art, for example those polymers selected from the group consisting of an acrylic polymer, a polyester polymer, a polyurethane polymer, a polyether polymer, a polyepoxide polymer, a silicon-containing polymer, mixtures thereof, and copolymers thereof, for example, "hybrid" resinous binders such as a polymer prepared by co-polymerizing one or more ethylenically unsaturated monomers (such as any of those described below) in the presence of a polyester polymer (as described in detail below). As used herein, by "silicon-containing polymers" is meant a polymer comprising one or more -SiO- units in the backbone. Such silicon-based polymers can include hybrid polymers, such as those comprising organic polymeric blocks with one or more -SiO- units in the backbone. The resinous binder (i) also usually comprises a curing agent having functional groups reactive with the functional groups of the film-forming polymer.

The polymer can comprise at least one reactive functional group selected from a hydroxyl group, a carboxyl group, an isocyanate group, a blocked isocyanate group, a primary amine group, a secondary amine group, an amide group, a carbamate group, a urea group, a urethane group, a vinyl group, an unsaturated ester group, a maleimide group, a fumarate group, an anhydride group, a hydroxy alkylamide group, an epoxy group, and mixtures of such groups. For example, suitable hydroxyl group-containing polymers can include acrylic polyols, polyester polyols, polyurethane polyols, polyether polyols, and mixtures thereof.

Suitable hydroxyl group and/or carboxyl group-containing acrylic polymers can be prepared from polymerizable ethylenically unsaturated monomers and are typically copolymers of (meth)acrylic acid and/or hydroxylalkyl esters of (meth)acrylic acid with one or more other polymerizable ethylenically unsaturated monomers such as alkyl esters of (meth)acrylic acid including methyl (meth)acrylate, ethyl (meth)acrylate, butyl (meth)acrylate and 2-ethyl hexylacrylate, and vinyl aromatic compounds such as styrene, alpha-methyl styrene, and vinyl toluene. As used herein, "(meth)acrylate" and like terms is intended to include both acrylates and methacrylates.

In some embodiments of the present invention the acrylic polymer can be prepared from ethylenically unsaturated, beta-hydroxy ester functional monomers. Such monomers can be derived from the reaction of an ethylenically unsaturated acid functional monomer, such as monocarboxylic acids, for example, acrylic acid, and an epoxy compound which does not participate in the free radical initiated polymerization with the unsaturated acid monomer. Examples of such epoxy compounds include glycidyl ethers and esters. Suitable glycidyl ethers include glycidyl ethers of alcohols and phenols such as butyl glycidyl ether, octyl glycidyl ether, phenyl glycidyl ether and the like. Suitable glycidyl esters include those which are commercially available from Shell Chemical Company under the tradename CARDURA E; and from Exxon Chemical Company under the tradename GLYDEXX-10. Alternatively, the beta-hydroxy ester functional monomers can be prepared from an ethylenically unsaturated, epoxy functional monomer, for example glycidyl (meth)acrylate and allyl glycidyl ether, and a saturated carboxylic acid, such as a saturated monocarboxylic acid, for example isostearic acid.

Epoxy functional groups can be incorporated into the polymer prepared from polymerizable ethylenically unsaturated monomers by copolymerizing oxirane group-containing monomers, for example glycidyl (meth)acrylate and allyl glycidyl ether, with other polymerizable ethylenically unsaturated monomers, such as those discussed above. Preparation of such epoxy functional acrylic polymers is described in detail in U.S. Patent No. 4,001,156 at columns 3 to 6.

Carbamate functional groups can be incorporated into the polymer prepared from polymerizable ethylenically unsaturated monomers by copolymerizing, for example, the above-described ethylenically unsaturated monomers with a carbamate functional vinyl monomer such as a carbamate functional alkyl ester of methacrylic acid. Useful carbamate functional alkyl esters can be prepared by reacting, for example, a hydroxyalkyl carbamate, such as the reaction product of ammonia and ethylene carbonate or propylene carbonate, with methacrylic anhydride. Other useful carbamate functional vinyl monomers include, for instance, the reaction product of hydroxyethyl methacrylate, isophorone diisocyanate, and hydroxypropyl carbamate; or the reaction product of hydroxypropyl methacrylate, isophorone diisocyanate, and methanol. Still other carbamate functional vinyl monomers may be used, such as the reaction product of isocyanic acid (HNCO) with a hydroxyl functional acrylic or methacrylic monomer such as hydroxyethyl acrylate, and those described in U.S. Patent No. 3,479,328. Carbamate functional groups can also be incorporated into the acrylic polymer by reacting a hydroxyl functional acrylic polymer with a low molecular weight alkyl carbamate such as methyl carbamate. Pendant carbamate groups can also be incorporated into the acrylic polymer by a "transcarbamoylation" reaction in which a hydroxyl functional acrylic polymer is reacted with a low molecular weight carbamate derived from an alcohol or a glycol ether. The carbamate groups exchange with the hydroxyl groups yielding the carbamate functional acrylic polymer and the original alcohol or glycol ether. Also, hydroxyl functional acrylic polymers can be reacted with isocyanic acid to provide pendent carbamate groups. Likewise, hydroxyl functional acrylic polymers can be reacted with urea to provide pendent carbamate groups.

The polymers prepared from polymerizable ethylenically unsaturated monomers can be prepared by solution polymerization techniques, which are well-known to those skilled in the art, in the presence of suitable catalysts such as organic peroxides or azo compounds, for example, benzoyl peroxide or N,N-azobis(isobutylronitrile). The polymerization can be carried out in an organic solution in which the monomers are soluble by techniques conventional in the art. Alternatively, these polymers can be prepared by aqueous emulsion or dispersion polymerization techniques which are well-known in the art. The ratio of reactants and reaction conditions are selected to result in an acrylic polymer with the desired pendent functionality.

Polyester polymers are also useful in the coating compositions of the invention as the film-forming polymer. Useful polyester polymers typically include the condensation products of polyhydric alcohols and polycarboxylic acids. Suitable polyhydric alcohols can include ethylene glycol, neopentyl glycol, trimethylol propane, and pentaerythritol. Suitable polycarboxylic acids can include adipic acid, 1,4-cyclohexyl dicarboxylic acid, and hexahydrophthalic acid. Besides the polycarboxylic acids mentioned above, functional equivalents of the acids such as anhydrides where they exist or lower alkyl esters of the acids such as the methyl esters can be used. Also, small amounts of monocarboxylic acids such as stearic acid can be used. The ratio of reactants and reaction conditions are selected to result in a polyester polymer with the desired pendent functionality, i.e., carboxyl or hydroxyl functionality.

For example, hydroxyl group-containing polyesters can be prepared by reacting an anhydride of a dicarboxylic acid such as hexahydrophthalic anhydride with a diol such as neopentyl glycol in a 1:2 molar ratio. Where it is desired to enhance air-drying, suitable drying oil fatty acids may be used and include those derived from linseed oil, soya bean oil, tall oil, dehydrated castor oil, or tung oil.

Carbamate functional polyesters can be prepared by first forming a hydroxyalkyl carbamate that can be reacted with the polyacids and polyols used in forming the polyester. Alternatively, terminal carbamate functional groups can be incorporated into the polyester by reacting isocyanic acid with a hydroxy functional polyester. Also, carbamate functionality can be incorporated into the polyester by reacting a hydroxyl polyester with a urea. Additionally, carbamate groups can be incorporated into the polyester by a transcarbamoylation reaction. Preparation of suitable carbamate functional group-containing polyesters are those described in U.S. Patent No. 5,593,733 at column 2, line 40 to column 4, line 9.

In certain embodiments of the present invention, the coating composition comprises less than 50 weight percent, less than 40 weight percent, or, in some cases, less than 30 weight percent of a hybrid resin prepared by co-polymerizing one or more polymerizable ethylenically unsaturated monomers, such as any of those previously discussed with respect to the acrylic polymers, in the presence of one or more polyester polymers, such as any of those described immediately above.

Polyurethane polymers containing terminal isocyanate or hydroxyl groups also can be used as the polymer (i) in the coating compositions of the invention. The polyurethane polyols or NCO-terminated polyurethanes which can be used are those prepared by reacting polyols including polymeric polyols with polyisocyanates. Polyureas containing terminal isocyanate or primary and/or secondary amine groups which also can be used are those prepared by reacting polyamines including polymeric polyamines with polyisocyanates. The hydroxyl/isocyanate or amine/isocyanate equivalent ratio is adjusted and reaction conditions are selected to obtain the desired terminal groups. Examples of suitable polyisocyanates include those described in U.S. Patent No. 4,046,729 at column 5, line 26 to column 6, line 28. Examples of suitable polyols include those described in U.S. Patent No. 4,046,729 at column 7, line 52 to column 10, line 35. Examples of suitable polyamines include those described in U.S. Patent No. 4,046,729 at column 6, line 61 to column 7, line 32 and in U.S. Patent No. 3,799,854 at column 3, lines 13 to 50.

Carbamate functional groups can be introduced into the polyurethane polymers by reacting a polyisocyanate with a polyester having hydroxyl functionality and containing pendent carbamate groups. Alternatively, the polyurethane can be prepared by reacting a polyisocyanate with a polyester polyol and a hydroxyalkyl carbamate or isocyanic acid as separate reactants. Examples of suitable polyisocyanates are aromatic isocyanates, such as 4,4'-diphenylmethane diisocyanate, 1,3-phenylene diisocyanate and toluene diisocyanate, and aliphatic polyisocyanates, such as 1,4-tetramethylene diisocyanate and 1,6-hexamethylene diisocyanate. Cycloaliphatic diisocyanates, such as 1,4-cyclohexyl diisocyanate and isophorone diisocyanate also can be employed.

Examples of suitable polyether polyols include polyalkylene ether polyols such as those having the following structural formulas: 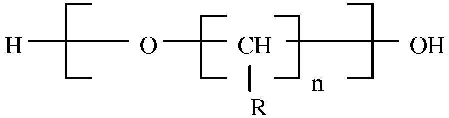 or 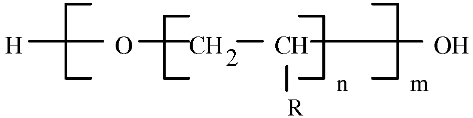 wherein the substituent R is hydrogen or a lower alkyl group containing from 1 to 5 carbon atoms including mixed substituents, and n has a value typically ranging from 2 to 6 and m has a value ranging from 8 to 100 or higher. Exemplary polyalkylene ether polyols include poly(oxytetramethylene) glycols, poly(oxytetraethylene) glycols, poly(oxy-1,2-propylene) glycols, and poly(oxy-1,2-butylene) glycols.

Also useful are polyether polyols formed from oxyalkylation of various polyols, for example, glycols such as ethylene glycol, 1,6-hexanediol, Bisphenol A, and the like, or other higher polyols such as trimethylolpropane, pentaerythritol, and the like. Polyols of higher functionality which can be utilized as indicated can be made, for instance, by oxyalkylation of compounds such as sucrose or sorbitol. One commonly utilized oxyalkylation method is reaction of a polyol with an alkylene oxide, for example, propylene or ethylene oxide, in the presence of an acidic or basic catalyst. Specific examples of polyethers include those sold under the names TERATHANE and TERACOL, available from E. I. Du Pont de Nemours and Company, Inc.

Polyepoxides such as those described below with reference to the curing agent (described below), can also be used.

In certain embodiments of the present invention, the resinous binder (i) comprises a polyurethane polymer having a number average molecular weight (Mn) of at least 2000. The number average molecular weight of the polyurethane polymer can range from 2000 to 500,000, typically from 3000 to 200,000.

The polymer can be present in the coating compositions in an amount of at least 2 percent by weight, usually at least 5 percent by weight, and typically at least 10 percent by weight based on weight of total resin solids in the composition. Also, the polymer having reactive functional groups can be present in the coating compositions of the invention in an amount less than 80 percent by weight, usually less than 60 percent by weight, and typically less than 50 percent by weight based on weight of total resin solids in the coating composition. The amount of the film-forming polymer present in the basecoating compositions of the present invention can range between any combination of these values inclusive of the recited values.

As aforementioned, in addition to the functional group-containing polymer, the coating compositions of the present invention can further comprise at least one curing agent having functional groups reactive with the functional groups of the polymer.

Dependent upon the reactive functional groups of the film-forming polymer, this curing agent can be selected from an aminoplast resin, a polyisocyanate, a blocked isocyanate, a polyepoxide, a polyacid, an anhydride, an amine, a polyol, and mixtures of any of the foregoing. In one embodiment, the at least one curing agent is selected from an aminoplast resin and a polyisocyanate.

Aminoplast resins, which can comprise phenoplasts, as curing agents for hydroxyl, carboxylic acid, and carbamate functional group-containing materials are well known in the art. Suitable aminoplast resins, such as, for example, those discussed above, are known to those of ordinary skill in the art. Aminoplasts can be obtained from the condensation reaction of formaldehyde with an amine or amide. Nonlimiting examples of amines or amides include melamine, urea, or benzoguanamine. Condensates with other amines or amides can be used; for example, aldehyde condensates of glycoluril, which give a high melting crystalline product useful in powder coatings. While the aldehyde used is most often formaldehyde, other aldehydes such as acetaldehyde, crotonaldehyde, and benzaldehyde can be used.

The aminoplast resin contains imino and methylol groups and in certain instances at least a portion of the methylol groups are etherified with an alcohol to modify the cure response. Any monohydric alcohol can be employed for this purpose including methanol, ethanol, n-butyl alcohol, isobutanol, and hexanol.

Nonlimiting examples of aminoplasts include melamine-, urea-, or benzoguanamine-formaldehyde condensates, in certain instances monomeric and at least partially etherified with one or more alcohols containing from one to four carbon atoms. Nonlimiting examples of suitable aminoplast resins are commercially available, for example, from Cytec Industries, Inc. under the trademark CYMEL® and from Solutia, Inc. under the trademark RESIMENE®.

In some embodiments of the present invention, the curing agent comprises a polyisocyanate curing agent. As used herein, the term "polyisocyanate" is intended to include blocked (or capped) isocyanates as well as unblocked (poly)isocyanates. The polyisocyanate can be an aliphatic or an aromatic polyisocyanate, or a mixture of the foregoing two. Diisocyanates can be used, although higher polyisocyanates such as isocyanurates of diisocyanates are often used. Higher polyisocyanates also can be used in combination with diisocyanates. Isocyanate prepolymers, for example, reaction products of polyisocyanates with polyols also can be used. Mixtures of polyisocyanate curing agents can be used.

If the polyisocyanate is blocked or capped, any suitable aliphatic, cycloaliphatic, or aromatic alkyl monoalcohol known to those skilled in the art can be used as a capping agent for the polyisocyanate. Other suitable capping agents include oximes and lactams. When used, the polyisocyanate curing agent is typically present, when added to the other components which form the coating composition, in an amount ranging from 0.5 to 65 weight percent, can be present in an amount ranging from 10 to 45 weight percent, and often are present in an amount ranging from 15 to 40 percent by weight based on the total weight of resin solids present in the composition.

Other useful curing agents comprise blocked isocyanate compounds such as, for example, the tricarbamoyltriazine compounds described in detail in U.S. Patent No. 5,084,541. When used, the blocked polyisocyanate curing agent can be present, when added to the other components in the composition, in an amount ranging up to 20 weight percent, and can be present in an amount ranging from 1 to 20 weight percent, based on the total weight of resin solids present in the composition.

Anhydrides as curing agents for hydroxyl functional group-containing materials also are well known in the art and can be used in the basecoating compositions of the present invention. Nonlimiting examples of anhydrides suitable for use as curing agents in the compositions of the invention include those having at least two carboxylic acid anhydride groups per molecule which are derived from a mixture of monomers comprising an ethylenically unsaturated carboxylic acid anhydride and at least one vinyl co-monomer, for example, styrene, alpha-methyl styrene, vinyl toluene, and the like. Nonlimiting examples of suitable ethylenically unsaturated carboxylic acid anhydrides include maleic anhydride, citraconic anhydride, and itaconic anhydride. Alternatively, the anhydride can be an anhydride adduct of a diene polymer such as maleinized polybutadiene or a maleinized copolymer of butadiene, for example, a butadiene/styrene copolymer. These and other suitable anhydride curing agents are described in U.S. Patent No. 4,798,746 at column 10, lines 16-50; and in U.S. Patent No. 4,732,790 at column 3, lines 41-57.

Polyepoxides as curing agents for carboxylic acid functional group-containing materials are well known in the art. Nonlimiting examples of polyepoxides suitable for use in the compositions of the present invention comprise polyglycidyl esters (such as acrylics from glycidyl methacrylate), polyglycidyl ethers of polyhydric phenols and of aliphatic alcohols, which can be prepared by etherification of the polyhydric phenol, or aliphatic alcohol with an epihalohydrin such as epichlorohydrin in the presence of alkali. These and other suitable polyepoxides are described in U.S. Patent No. 4,681,811 at column 5, lines 33 to 58.

Suitable curing agents for epoxy functional group-containing materials comprise polyacid curing agents, such as the acid group-containing acrylic polymers prepared from an ethylenically unsaturated monomer containing at least one carboxylic acid group and at least one ethylenically unsaturated monomer which is free from carboxylic acid groups. Such acid functional acrylic polymers can have an acid number ranging from 30 to 150. Acid functional group-containing polyesters can be used as well. The above-described polyacid curing agents are described in further detail in U.S. Patent No. 4,681,811 at column 6, line 45 to column 9, line 54.

Also well known in the art as curing agents for isocyanate functional group-containing materials are polyols, that is, materials having two or more hydroxyl groups per molecule, different from component (b) when component (b) is a polyol. Nonlimiting examples of such materials suitable for use in the compositions of the invention include polyalkylene ether polyols, including thio ethers; polyester polyols, including polyhydroxy polyesteramides; and hydroxyl-containing polycaprolactones and hydroxy-containing acrylic copolymers. Also useful are polyether polyols formed from the oxyalkylation of various polyols, for example, glycols such as ethylene glycol, 1,6-hexanediol, Bisphenol A and the like, or higher polyols such as trimethylolpropane, pentaerythritol, and the like. Polyester polyols also can be used. These and other suitable polyol curing agents are described in U.S. Patent No. 4,046,729 at column 7, line 52 to column 8, line 9; column 8, line 29 to column 9, line 66; and U.S. Patent No. 3,919,315 at column 2, line 64 to column 3, line 33.

Polyamines also can be used as curing agents for isocyanate functional group-containing materials. Nonlimiting examples of suitable polyamine curing agents include primary or secondary diamines or polyamines in which the radicals attached to the nitrogen atoms can be saturated or unsaturated, aliphatic, alicyclic, aromatic, aromatic-substituted-aliphatic, aliphatic-substituted-aromatic, and heterocyclic. Nonlimiting examples of suitable aliphatic and alicyclic diamines include 1,2-ethylene diamine, 1,2-porphylene diamine, 1,8-octane diamine, isophorone diamine, propane-2,2-cyclohexyl amine, and the like. Nonlimiting examples of suitable aromatic diamines include phenylene diamines and the toluene diamines, for example, o-phenylenediamine and p-tolylenediamine. These and other suitable polyamines described in detail in U.S. Patent No. 4,046,729 at column 6, line 61 to column 7, line 26.

When desired, appropriate mixtures of curing agents may be used. It should be mentioned that the coating compositions can be formulated as a one-component composition where a curing agent such as an aminoplast resin and/or a blocked isocyanate compound such as those described above is admixed with other composition components. The one-component composition can be storage stable as formulated. Alternatively, compositions can be formulated as a two-component composition, for example, where a polyisocyanate curing agent such as those described above can be added to a pre-formed admixture of the other composition components just prior to application. The pre-formed admixture can comprise curing agents such as aminoplast resins and/or blocked isocyanate compounds such as those described above.

As previously mentioned, the coating compositions of the present invention further comprise (ii) a pigment composition. In the coating compositions of the present invention, the pigment composition comprises: (1) colored inorganic pigment particles selected from blue inorganic pigment particles, green inorganic pigment particles, brown inorganic pigment particles, turquoise inorganic pigment particles, and white inorganic pigment particles; (2) metal and/or metal alloy flake pigment particles; and (3) interference pigment particles. More specifically, the pigment composition (ii) of the coating compositions of the present invention is selected from:
(a) a composition (i) 27 to 67 percent by weight, such as 40 to 60 percent by weight, of blue inorganic pigment particles; (ii) up to 40 percent by weight, such as 20 to 30 percent by weight, of metal and/or metal alloy flake pigment particles; and (iii) up to 40 percent by weight, such as 10 to 30 percent by weight, of interference pigment particles, wherein the pigment composition comprises at least 8 percent by weight, such as 20 to 60 percent by weight, of (ii) and/or (iii); and wherein each weight percent is based on the total weight of pigment particles present in the coating composition;
(b) a composition comprising: (i) 20 to 92.5 percent by weight, such as 40 to 90 percent by weight, of green inorganic pigment particles; (ii) up to 40 percent by weight, such as 10 to 35 percent by weight, of metal and/or metal alloy flake pigment particles; and (iii) 7.5 to 40 percent by weight, such as 10 to 35 percent by weight, of interference pigment particles,; and wherein each weight percent is based on the total weight of pigment particles present in the coating composition;
(c) a composition comprising: (i) 43.5 to 94.5 percent by weight, such as 60 to 90 percent by weight, of green inorganic pigment particles; (ii) 13.3 to 40 percent by weight, such as 15 to 35, percent by weight, of titanium dioxide coated glass flake pigment particles;
   and/or(iii) 5.5 to 31.4 percent by weight, such as 10 to 28 percent by weight, of aluminum coated glass flake pigment particles, wherein the pigment composition comprises no more than 56.5 percent by weight of (ii) and (iii) combined; and wherein each weight percent is based on the total weight of pigment particles present in the coating composition;
(d) a composition comprising: (i) 29.3 to 90.3 percent by weight, such as 40 to 85 percent by weight, of brown inorganic pigment particles; (ii) 9.5 to 40 percent by weight, such as 15 to 35 percent by weight, of metal and/or metal alloy flake pigment particles; and (iii) up to 30.7 percent by weight, such as 10 to 25 percent by weight, of interference pigment particles wherein the pigment composition comprises at least 9.7 percent by weight, such as 15 to 60 percent by weight, of (ii) and (iii) combined; and wherein each weight percent is based on the total weight of pigment particles present in the coating composition;
(e) a composition comprising: (i) 52 to 75 percent by weight, such as 45 to 65 percent by weight, of turquoise inorganic pigment particles; (ii) 25 to 40 percent by weight, such as 30 to 40 percent by weight, of metal and/or metal alloy flake pigment particles; and (iii) up to 31.5 percent by weight, of interference pigment particles, wherein the pigment composition comprises at least 34.2 percent by weight, such as 35 to 60 percent by weight, of (ii) and (iii) combined; and wherein each weight percent is based on the total weight of pigment particles present in the coating composition; and
(f) a composition comprising: (i) 27 to 88.5 percent by weight, such as 30 to 85 percent by weight, of white inorganic pigment particles; (ii) 7.5 to 40 percent by weight, such as 10 to 30 percent by weight, of metal and/or metal alloy flake pigment particles; and (iii) up to 31 percent by weight, such as 25 to 30 percent by weight, of interference pigment particles, wherein the pigment composition comprises 11.5 to 74 percent by weight, such as 15 to 35 percent by weight, of (ii) and (iii) combined; wherein each weight percent is based on the total weight of pigment particles present in the coating composition.

It has been discovered that the foregoing pigment composition are substantially more likely to produce a coating system exhibiting the appearance of a "tri-coat" coating system in few than three coating layers, as has been required by the prior art.

As indicated, in certain embodiments, the pigment composition comprises blue inorganic pigment particles. As used herein, the term "blue inorganic pigment particles" refers to inorganic pigment particles **Cobalt- Chromium-Oxide complex with a Color Index Number of Pigment Blue 28.** Blue inorganic pigment particles that are suitable for use in the coating compositions of the present invention include, for example, **V9250 Blue from Ferro or Heucodur Blue 550 from Heubach.**

As indicated, in certain embodiments, the pigment composition comprises green inorganic pigment particles; **modified Chromium-Oxide Cobalt-free complex.** Green inorganic pigment particles that are suitable for use in the coating compositions of the present invention include, for example, **V12650 Green from Ferro.**

As indicated, in certain embodiments, the pigment composition comprises brown inorganic pigment particles; **Titanium-Manganese-Antimony complex with a Color Index Number of Pigment Yellow 164.** Brown inorganic pigment particles that are suitable for use in the coating compositions of the present invention include, for example, **V10550 Brown from Ferro.**

As indicated, in certain embodiments, the pigment composition comprises turquoise inorganic pigment particles **Molybdenum-Chromium-Titanium Dioxide complex with a Color Index Number of Pigment Blue 36.** Turquoise inorganic pigment particles that are suitable for use in the coating compositions of the present invention include, for example, **F5686 Turquoise from Ferro.**

As indicated, in certain embodiments, the pigment composition comprises white inorganic pigment particles **Titanium Dioxide with Color Index Number of Pigment White 6.** White inorganic pigment particles that are suitable for use in the coating compositions of the present invention include, for example, **Tiona 595 from Millennium Inorganic or Ti-Pure R-960-09 from DuPont Canada Inc.**

As indicated, in certain embodiments, the pigment composition comprises metal and/or metal alloy flake pigment particles. Suitable metals and metal alloys include, for example, aluminum, chromium, cobalt, iron, copper, manganese, nickel, silver, gold, iron, tin, zinc, bronze, brass, including alloys thereof, such as zinc-copper alloys, zinc-tin alloys, and zinc-aluminum alloys, among others. Some specific examples include nickel antimony titanium, nickel niobium titanium, chrome antimony titanium, chrome niobium, chrome tungsten titanium, chrome iron nickel, chromium iron oxide, chromium oxide, chrome titanate, manganese antimony titanium, manganese ferrite, chromium green-black, cobalt titanates, chromites, or phosphates, cobalt magnesium, and aluminites, iron oxide, iron cobalt ferrite, iron titanium, zinc ferrite, zinc iron chromite, copper chromite, as well as combinations thereof.

In the present invention, such pigments are in the form of flakes. For example, "leafing" aluminum flakes are often suitable. As used herein, the term "flake" means that a particle has a ratio of its width to its thickness (termed aspect ratio) that is at least 2 and often falls in the range of 10 to 2,000, such as 3 to 400, or, in some cases, 10 to 200, including 10 to 150. As such, a "flake" particle is one that has a substantially flat structure. In some case, such flakes can have a coating deposited thereon, such as is the case with silica coated copper flakes.

In certain embodiments, such flake particles have a thickness of less than 0.05 microns to 10 microns, such as 0.5 to 5 microns. In certain embodiments, such flake particles have a maximum width of 10 to 150 microns, such as 10 to 30 microns.

In certain embodiments, the coating composition comprises flake particles comprising rounded edges and a smooth and flat surface, as opposed to jagged edges. Flakes having angular edges and uneven surfaces are known in the art as "cornflakes". On the other hand, flakes distinguished by more rounded edges, smoother, flatter surfaces are referred to as "silver dollar" flakes. Moreover, in certain embodiments, the flake metal or metal alloy particles comprising rounded edges have a maximum width of no more than 25 micron, such as 10 to 15 micron, when measured according to ISO 1524.

Additional suitable flake metal or metal alloy pigment particles include colored metallic pigments, such as those in which a coloring pigment is chemically adsorbed on the surface of a metallic pigment. Such colored metallic pigments are described in U.S. Patent No. 5,037,745 at col. 2, line 55 to col. 7, line 54. Some such colored metallic pigments are also commercially available and include those available from U.S. Aluminum, Inc., Flemington, NJ, under the tradename FIREFLAKE. In certain embodiments, an infrared transparent pigment, such as the perylene-based pigments described below, can be chemically adsorbed on the surface of the metallic pigment, to provide a dark, sometimes black, colored infrared reflective metallic pigment.

As indicated, in certain embodiments, the pigment composition comprises interference pigment particles. As used herein, the term "interference pigment particle" refers to a pigment particle having a multi-layer structure having alternating layers of material of different refractive index. Suitable interference pigments include, for example,pigments comprising a substrate of e.g. mica, SiO₂, Al₂O₃, TiO₂ or glass that is coated with one or more layers of metal oxides, e.g. titanium dioxide, iron oxide, titanium iron oxide or chrome oxide or combinations thereof, or pigments comprising combinations of metal and metal oxide, such as aluminum coated with layers of iron oxide layers and/or silicon dioxide.

As indicated, in certain embodiments, the pigment composition comprises "interference pigment particles", such as are commercially available, such as Iriodin 9605 Blue Silver from EMD/Merck, T60-25 SW Turquoise Xirallic from EMD/Merck, T60-10 Crystal Silver Xirallic from EMD/Merck, T20-04 Lapis Sunlight Colorstream from EMD/Merck, T303D Exterior Lumina Turquoise from Engelhard Corp., T60-23 RII Galaxy Blue Xirallic from EMD/Merck, and F60-50 SW Fireside Copper Xirallic from EMD/Merck.

As indicated, in certain embodiments, the pigment composition comprises titanium dioxide coated glass flake pigment particles, such as are commercially available from **[Toyo Aluminum K.K. as Metashine 2025PST-M.]**

As indicated, in certain embodiments, the pigment composition comprises aluminum coated glass flake pigment particles, such as are commercially available from **[Nippon Sheet Glass as Metashine ST1030RSJ4 or Metashine ST1022RSJ4.]**

In certain embodiments, the coating composition comprises pigment composition (a) mentioned above and the composition, when deposited over a substrate and cured, provides a cured coating having a hue angle of 183-235 when measured at a 25° viewing angle using a multi-angle spectrophotometer, such as an MA68I Multi-angle spectrophotometer, commercially available from X-Rite Instruments, Inc. In certain of these embodiments, the sum of (i), (ii) and (iii) is 100 percent by weight, based on the total weight of pigment particles present in the coating composition.

In certain embodiments, the coating composition comprises pigment composition (b) mentioned above and the composition, when deposited over a substrate and cured, provides a cured coating having a hue angle of 118-158 when measured at a 25° viewing angle using a multi-angle spectrophotometer, such as an MA68I Multi-angle spectrophotometer, commercially available from X-Rite Instruments, Inc. In certain of these embodiments, the sum of (i), (ii) and (iii) is 100 percent by weight, based on the total weight of pigment particles present in the coating composition.

In certain embodiments, the coating composition comprises pigment composition (c) mentioned above and the composition, when deposited over a substrate and cured, provides a cured coating having a hue angle of 108 to 132 when measured at a 25° viewing angle using a multi-angle spectrophotometer, such as an MA68I Multi-angle spectrophotometer, commercially available from X-Rite Instruments, Inc. In certain of these embodiments, the sum of (i), (ii) and (iii) is 100 percent by weight, based on the total weight of pigment particles present in the coating composition.

In certain embodiments, the coating composition comprises pigment composition (d) mentioned above and the composition, when deposited over a substrate and cured, provides a cured coating having a hue angle of 43.7 to 46.8 when measured at a 25° viewing angle using a multi-angle spectrophotometer, such as an MA68I Multi-angle spectrophotometer, commercially available from X-Rite Instruments, Inc. In certain of these embodiments, the coating composition of claim 1, wherein the sum of (i), (ii) and (iii) is 100 percent by weight, based on the total weight of pigment particles present in the coating composition.

In certain embodiments, the coating composition comprises pigment composition (e) mentioned above and the composition, when deposited over a substrate and cured, provides a cured coating having a hue angle of 170 to 199 when measured at a 25° viewing angle using a multi-angle spectrophotometer, such as an MA68I Multi-angle spectrophotometer, commercially available from X-Rite Instruments, Inc. In certain of these embodiments, the sum of (i), (ii) and (iii) is 100 percent by weight, based on the total weight of pigment particles present in the coating composition.

In certain embodiments, the coating composition comprises pigment composition (f) mentioned above and composition, when deposited over a substrate and cured, provides a cured coating having a hue angle of 141 to 237 and lightness of 79.6 to 92.5 when measured at a 25° viewing angle using a multi-angle spectrophotometer, such as an MA68I Multi-angle spectrophotometer, commercially available from X-Rite Instruments, Inc. In certain of these embodiments, the sum of (i), (ii) and (iii) is 100 percent by weight, based on the total weight of pigment particles present in the coating composition.

In certain embodiments, the coating compositions described above further comprise an aqueous dispersion of polymeric microparticles, typically crosslinked polymeric microparticles. Such crosslinked microparticles can be prepared, for example, the non-aqueous dispersion method comprising polymerizing a mixture of ethylenically unsaturated co-monomers at least one of which is a crosslinking co-monomer, in an organic liquid in which the mixture is soluble but the resultant polymer is insoluble. Often, the polymeric microparticles are be prepared by emulsion polymerization of a mixture of ethylenically unsaturated co-monomers which can include a crosslinkable monomer in an aqueous medium by methods well known in the art. The ethylenically unsaturated co-monomers can be polymerized in the presence of a polymer, typically a hydrophobic polymer, for example a hydrophobic acrylic, polyester, and/or a polyurethane polymer. By "crosslinkable monomer" is meant a polymerizable ethylenically monomer having at least two polymerizable ethylenically unsaturated bonds in the molecule, or, alternatively, a combination of two different monomers having mutually reactive groups. Specific examples of such crosslinkable monomers include ethylene glycol di(meth)acrylate, hexanediol di(meth)acrylate, trimethylolpropane tri(meth)acrylate, divinyl benzene, and a combination of an epoxy functional monomer such as glycidyl (meth)acrylate and a carboxylic acid functional monomer such as (meth)acrylic acid. Suitable, but non-limiting examples of polymeric microparticles are those described in U.S. Patent Nos. 5,071,904; 4,728,545; 4,539,363; and 4,403,003.

The coating compositions of the present invention can comprise one or more aqueous dispersions of polymeric microparticles, usually crosslinked polymeric microparticles, in an amount up to 75 weight percent, sometimes up to 70 weight percent, sometimes up to 60 weight percent, and sometimes up to 55. The coating compositions also can comprise one or more aqueous dispersions of polymicroparticles, usually crosslinked polymeric microparticles, in an amount equal to or greater than 20 weight percent, sometimes equal to or greater than 25 weight percent, sometimes equal to or greater than 30 weight percent, and sometimes equal to or greater than 35 weight percent. The amount of aqueous dispersion of polymeric microparticles present can range between any of the above-stated levels, inclusive of the recited values.

In addition to the components described above, the coating compositions of the present invention can contain a variety of other optional ingredients. If desired, other resinous materials can be included in conjunction with the aforedescribed polymers, curing agents and aqueous polymeric microparticles. Likewise, the coating composition can include additive materials, for example, rheology control agents, hindered amine light stabilizers and/or ultraviolet light absorbers, catalysts, fillers, surfactants and the like.

In certain embodiments, a coating composition of the present invention is applied over the substrate. In certain embodiments, the coating composition is applied directly onto at least a portion of an electrodeposited coating layer of the type described earlier. In some embodiments, the coating composition is applied directly onto at least a portion of a primer-surfacer coating layer of the type described earlier. As used herein, by applying a composition "directly onto" at least a portion of a substrate or previously formed coating layer is meant that the composition is applied onto the substrate or coating layer and is in surface contact with the substrate or coating layer, with no intervening coating layer(s).

After a coating composition of the present invention is deposited on the substrate, and optionally dried (and cured and/or cooled, if desired), one or more conventional clearcoat can be applied over the coating composition of the present invention. The clearcoat may then be dried and/or cured optionally simultaneously with a previously applied coating compositions of the present invention.

The curing step can be carried out by any conventional drying technique, such as hot air convection drying using a hot air convection oven (such as an automotive radiant wall/convection oven which is commercially available from Durr, Haden or Thermal Engineering Corporation) or, if desired, infrared heating, such that any crosslinkable components of the clearcoat material are crosslinked to such a degree that the automobile industry accepts the coating method as sufficiently complete to transport the coated automobile body without damage to the clearcoat. Generally, the liquid clearcoat material is heated to a temperature of 120°C to 150°C for a period of 20 to 40 minutes to cure the liquid clearcoat.

If the coating composition of the present invention was not cured prior to applying the clearcoat material, both the coating composition of the present invention and the clearcoat material can be cured together by applying hot air convection and/or infrared heating using conventional apparatus to cure both the compositions.

Once the coating composition of the present invention has been applied to form an opaque coating layer, the opaque coating layer, optionally, is dehydrated, typically by heating to a temperature and for a time sufficient to drive off excess solvents, for example, water, but insufficient to cure the opaque coating layer. Dehydration of the opaque coating layer also can be accomplished by giving the coated substrate a flash period at ambient conditions to for a time sufficient to allow solvent to evaporate from the coating layer. Suitable dehydration conditions will depend on the particular coating compositions employed and on the ambient humidity, but in general, a dehydration time of from 1 to 5 minutes at a temperature of 80°F to 250°F (20°C to 121°C) is sufficient. If a flash period is used in lieu of or in combination with thermal dehydration conditions, the opaque coating layer can be exposed to ambient conditions for a period of from 1 to 20 minutes.

The process of the present invention further comprises forming a top coating layer on the opaque coating layer by depositing a curable top coating composition which is substantially pigment-free directly onto at least a portion of the opaque coating layer. In certain of these embodiments, the opaque coating layer is uncured (in a wet-on-wet application). The substantially pigment-free top coating compositions used in any of the processes of the present invention can include aqueous coating compositions, solvent-based compositions, and compositions in solid particulate form, i.e., powder coating compositions. Any of the transparent or clear coating compositions known in the art are suitable for this purpose. Suitable non-limiting examples include the clear coating compositions described in U.S. Patent Nos. 4,650,718; 5,814,410; 5,891,981; and WO 98/14379. Specific non-limiting examples include TKU-1050AR, ODCT8000, and those available under the tradenames DIAMOND COAT® and NCT®, all commercially available from PPG Industries, Inc.

As used herein, by "substantially pigment-free" coating composition is meant a coating composition which forms a transparent coating, such as a clearcoat. Such compositions are sufficiently free of pigment or particles such that the optical properties of the resultant coatings are not seriously compromised. As used herein, "transparent" means that the cured coating has a BYK Haze index of less than 50 as measured using a BYK/Haze Gloss instrument.

Once the top coating layer (i.e., the clearcoating layer) has been formed on at least a portion of the opaque coating layer, the coated substrate is , in certain embodiments, subjected to conditions sufficient to simultaneously cure the top coating layer, the opaque coating layer, and, optionally, the primer-surfacer and/or electrodeposition layer. In the curing operation, solvents are driven off and the film-forming materials of the various coating layers are each crosslinked. Curing of the coating layers can be accomplished by any known curing methods including by thermal energy, infrared, ionizing or actinic radiation, or by any combination thereof. Generally, the curing operation can be carried out at temperatures ranging from 50°F to 475°F (10°C to 246°C), however, lower or higher temperatures may be used as necessary to activate crosslinking mechanisms. Cure is as defined above.

The film thickness of the opaque coating layer and the top coating layer can range from 1 to 50, usually from 5 to 30, and often from 10 to 25 micrometers.

The processes of the present invention provide multilayer composite coatings which have excellent appearance and physical properties, and are particularly suitable for use in the coating of motor vehicles, for example, automobiles and trucks. In a particular embodiment, the multilayer composite coating formed by any of the processes of the present invention described herein has a chip resistance rating ranging from 4 to 10, typically from 6 to 10, as determined in accordance with ASTM D 3170-01.

The present invention also is directed to an improved process for forming a multilayer composite coating on a motor vehicle substrate comprising the sequential steps of:(1)passing a conductive motor vehicle substrate to an electrocoating station located on a coating line;(2) electrocoating the substrate serving as a charged electrode in an electrical circuit comprising said electrode and an oppositely charged counter electrode, said electrodes being immersed in an aqueous electrodepositable composition (such as any of the previously described electrodepositable coating compositions), comprising passing electric current between said electrodes to cause deposition of the electrodepositable composition on the substrate as a substantially continuous film of electrodeposition coating; (3) passing the coated substrate of step (2) through an electrodeposition coating curing station located on the coating line to cure the electrodepositable composition on the substrate, forming an electrodeposition coating layer thereon; (4) passing the coated substrate of step (3) to a primer-surfacer coating station located on the coating line; (5) applying a primer-surfacer coating composition directly to at least a portion of the electrodeposition coating layer to form a primer-surfacer coating layer thereon; (6) passing the coated substrate of step (5) through a primer-surfacer curing station located on the coating line to cure the primer-surfacer coating layer;(7)passing the coated substrate of step (6) to a basecoating station located on the coating line;(8)applying an aqueous coating composition of the present invention (such as any of those described above) directly onto at least a portion of the primer-surfacer coating layer to form an opaque coating layer thereon;(9)optionally, passing the coated substrate of step (8) through a flash oven located on the coating line to dehydrate but not cure the opaque coating layer; (10) passing the coating substrate of step (8), or optionally step (9), to a clearcoating station located on the coating line;(11)applying a substantially pigment-free coating composition (such as any of the previously described transparent or clear coating compositions) directly onto at least a portion of the basecoating layer to form a clearcoating layer thereon; and(12)passing the coating substrate of step (11) through a topcoating curing station located on the coating line to cure the opaque coating layer and the clearcoating layer simultaneously. These and other aspects of the claimed invention are further illustrated by the following non-limiting examples.

### EXAMPLES

The example formulations were prepared by first preparing liquid tint paste dispersions of the inorganic pigments, acrylic polymer, de-ionized water, 50% aqueous dimethanolamine, propylene glycol monomethyl ether, and propylene glycol monopropyl ether. The for mentioned materials are dispersed to a minimum of a 7 Hegman using a horizontal bead mill common for making tint paste dispersions. Second, a slurry mixture of micas, and glass flakes combined with N-butoxypropanol, UV absorber, polypropylene glycol, phosphatized epoxy, and aluminum passivator (if an aluminum is present) are mixed together using a cowles blade. Finally, the materials listed in tables below are added sequentially followed by the slurry and then by the liquid tint paste dispersions, while under agitation using a propeller style agitation blade.

**Green Color Space**

| **Ingredients** | **1** | **2** | **3** | **4** | **5** | **6** | **7** | **8** | **9** | **10** | **11** | **12** | **13** |
|---|---|---|---|---|---|---|---|---|---|---|---|---|---|
| Mineral Spirits | 35.718 | 35.718 | 35.718 | 35.718 | 35.718 | 35.718 | 35.718 | 35.718 | 35.718 | 35.718 | 35.718 | 35.718 | 35.718 |
| Deionized water | 240.033 | 240.033 | 240.033 | 240.033 | 240.033 | 240.033 | 240.033 | 240.033 | 240.033 | 240.033 | 240.033 | 240.033 | 240.033 |
| Acrylic Latex Resin Solution¹ | 614.622 | 614.622 | 614.622 | 614.622 | 614.622 | 614.622 | 614.622 | 614.622 | 614.622 | 614.622 | 614.622 | 614.622 | 614.622 |
| Dimethylethanolamine, 50% aqueous | 9.228 | 9.228 | 9.228 | 9.228 | 9.228 | 9.228 | 9.228 | 9.228 | 9.228 | 9.228 | 9.228 | 9.228 | 9.228 |
| CYMEL 385² | 260.452 | 260.452 | 260.452 | 260.452 | 260.452 | 260.452 | 260.452 | 260.452 | 260.452 | 260.452 | 260.452 | 260.452 | 260.452 |
| Acid Functional Polyester Solution³ | 26.041 | 26.041 | 26.041 | 26.041 | 26.041 | 26.041 | 26.041 | 26.041 | 26.041 | 26.041 | 26.041 | 26.041 | 26.041 |
| N-butoxypropanol | 178.594 | 178.594 | 178.594 | 178.594 | 178.594 | 178.594 | 178.594 | 178.594 | 178.594 | 178.594 | 178.594 | 178.594 | 178.594 |
| UV Absorber⁴ | 13.096 | 13.096 | 13.096 | 13.096 | 13.096 | 13.096 | 13.096 | 13.096 | 13.096 | 13.096 | 13.096 | 13.096 | 13.096 |
| Polypropylene Glycol 425⁵ | 71.437 | 71.437 | 71.437 | 71.437 | 71.437 | 71.437 | 71.437 | 71.437 | 71.437 | 71.437 | 71.437 | 71.437 | 71.437 |
| Phosphatized Epoxy⁶ | 4.842 | 4.842 | 4.842 | 4.842 | 4.842 | 4.842 | 4.842 | 4.842 | 4.842 | 4.842 | 4.842 | 4.842 | 4.842 |
| Lumina Exterior Turquoise T303D⁷ | 1.3 | 102.1 | 41.3 | 51.0 | 102.1 | 0.0 | 2.6 | 0.0 | 102.1 | 0.0 | 41.3 | 52.3 | 41.3 |
| **pigment %** | **0.5** | **40** | **16.2** | **20** | **40** | **0** | **1** | **0** | **40** | **0** | **16.2** | **20.5** | **16.2** |
| TCR 3040 Aluminum Paste⁸ | 1.6 | 62.6 | 50.7 | 125.2 | 125.2 | 125.2 | 0.0 | 64.2 | 0.0 | 3.1 | 50.7 | 0.0 | 50.7 |
| **pigment %** | **0.5** | **20** | **16.2** | **40** | **40** | **40** | **0** | **20.5** | **0** | **1** | **16.2** | **0** | **16.2** |
| Aluminum Passivator Sol⁹ | 0.7 | 26.1 | 21.1 | 52.1 | 52.1 | 52.1 | 0.0 | 26.7 | 0.0 | 1.3 | 21.1 | 0.0 | 21.1 |
| IR Green Tint Paste¹⁰ | 460.262 | 185.964 | 314.280 | 185.964 | 92.982 | 278.947 | 460.262 | 369.604 | 278.947 | 460.262 | 314.280 | 369.604 | 314.280 |
| **pigment %** | **0.99** | **40** | **67.6** | **40** | **20** | **60** | **99** | **79.5** | **60** | **99** | **67.6** | **79.5** | **67.6** |
| Deionized water | 1.2 | 70.5 | 38.1 | 70.5 | 94.1 | 47.0 | 1.2 | 24.1 | 47.0 | 1.2 | 38.1 | 24.1 | 38.1 |
| Acrylic Latex Resin Solution | 0.9 | 54.1 | 29.2 | 54.1 | 72.1 | 36.1 | 0.9 | 18.5 | 36.1 | 0.9 | 29.2 | 18.5 | 29.2 |
| Dimethylethanolamine, 50% aqueous | 3.5 | 4.4 | 2.8 | 1.5 | 2.4 | 3.6 | 2.9 | 3.3 | 1.9 | 2.4 | 3.1 | 3.0 | 3.8 |
| Deionized water | 104.6 | 44.0 | 73.4 | 88.2 | 41.9 | 95.1 | 95.1 | 98.9 | 0.0 | 95.1 | 77.3 | 68.5 | 71.1 |
| 25° Hue | 118.82 | 118.78 | 150.32 | 150.58 | 127.38 | 132.79 | 133.13 | 143.78 | 143.31 | 118.77 | 119.07 | 119.10 | 119.06 |
| **Visual Tri-coat Effect**¹² | **no** | **yes** | **yes** | **yes** | **yes** | **no** | **no** | **no** | **yes** | **no** | **yes** | **yes** | **yes** |

| | | | | | | | | | | | | | |
|---|---|---|---|---|---|---|---|---|---|---|---|---|---|
| ¹ Latex resin consisting of 24% Butyl Acrylate, 11% Methyl Methacrylate, 3% Ethylene Glycol Dimethacrylate, 2% Acrylic Acid and 60% consisting of 62.4% polyester (52.5% Adipic Acid and 47.5% Dimethyl Propanediol), 20% Butyl Acrylate, 7.2% Hydroxy Ethyl Acrylate and 10.4% 1,6 Hexamethylene Diisocyanate. The latex is made in 97.8% deionized water, 1.5% Dimethylethanolamine, 0.4% Ethanol, 0.2% Isopropanol and 0.1% Dipropylene Glycol. The weight solids of the latex resin is 43.5%. ² Aminoplast from Cytec Industries. ³ Resin consisting of 38.7% ESTERDIOL 204, 42.9% 4-Methyl Hexahydrophthalic Anhydride and 18.4% Hexahydrophthalic Anhydride that is dispersed in deionized water using Dimethylethanolamine. The weight solids is 22.9%. ⁴ TINUVIN 1130 from BASF. ⁵ MW = 425. ⁶ Polyglycidyl ether of bisphenol A having an epoxy equivalent weight of 880 reacted with phosphonic acid in an 83:17 weight ratio. ⁷ Available from Ferro Corp. ⁸ Available from Toyal America. ⁹ LUBRIZOL 2062 available from Lubrizol Corp. ¹⁰ Prepared from grinding Ferro V12650 green in solvents propylene glycol monomethyl ether, propylene glycol monopropyl ether, deionized water, acrylic polymer grind vehicle¹¹ and 50% by weight aqueous dimethylethanolamine; weight ratio 252.6/13.5/13.5/29.3/149.3/2.0. ¹¹ Aqueous acrylic resin consisting of 35% Butyl Acrylate, 30% Styrene, 18% Butyl Methacrylate, 8.5% Hydroxy Ethyl Acrylate and 8.5% Acrylic Acid. The acrylic resin is made in 81.4% deionized water, 16.3% Diethylene Glycol Monobutyl Ether, 2.0% Dimethyl Ethanolamine and 0.3% Mineral Spirits. The weight solids of the acrylic resin is 26.0%. ¹² Subjective evaluation by color experts. | | | | | | | | | | | | | |

**Turquoise Color Space**

| **Ingredients** | **1** | **2** | **3** | **4** | **5** | **6** | **7** | **8** | **9** | **10** | **11** | **12** | **13** |
|---|---|---|---|---|---|---|---|---|---|---|---|---|---|
| Mineral Spirits | 35.718 | 35.718 | 35.718 | 35.718 | 35.718 | 35.718 | 35.718 | 35.718 | 35.718 | 35.718 | 35.718 | 35.718 | 35.718 |
| Deionized water | 240.033 | 240.033 | 240.033 | 240.033 | 240.033 | 240.033 | 240.033 | 240.033 | 240.033 | 240.033 | 240.033 | 240.033 | 240.033 |
| Acrylic Latex Resin Solution | 614.622 | 614.622 | 614.622 | 614.622 | 614.622 | 614.622 | 614.622 | 614.622 | 614.622 | 614.622 | 614.622 | 614.622 | 614.622 |
| Dimethylethanolamine, 50% aqueous | 9.228 | 9.228 | 9.228 | 9.228 | 9.228 | 9.228 | 9.228 | 9.228 | 9.228 | 9.228 | 9.228 | 9.228 | 9.228 |
| CYMEL 385 | 260.452 | 260.452 | 260.452 | 260.452 | 260.452 | 260.452 | 260.452 | 260.452 | 260.452 | 260.452 | 260.452 | 260.452 | 260.452 |
| Acid Functional Polyester Solution | 26.041 | 26.041 | 26.041 | 26.041 | 26.041 | 26.041 | 26.041 | 26.041 | 26.041 | 26.041 | 26.041 | 26.041 | 26.041 |
| N-butoxypropanol | 178.594 | 178.594 | 178.594 | 178.594 | 178.594 | 178.594 | 178.594 | 178.594 | 178.594 | 178.594 | 178.594 | 178.594 | 178.594 |
| UV Absorber | 13.096 | 13.096 | 13.096 | 13.096 | 13.096 | 13.096 | 13.096 | 13.096 | 13.096 | 13.096 | 13.096 | 13.096 | 13.096 |
| Polypropylene Glycol 425 | 71.437 | 71.437 | 71.437 | 71.437 | 71.437 | 71.437 | 71.437 | 71.437 | 71.437 | 71.437 | 71.437 | 71.437 | 71.437 |
| Phosphatized Epoxy | 4.842 | 4.842 | 4.842 | 4.842 | 4.842 | 4.842 | 4.842 | 4.842 | 4.842 | 4.842 | 4.842 | 4.842 | 4.842 |
| Lumina Exterior Turquoise T303D | 1.3 | 102.1 | 41.3 | 51.0 | 102.1 | 0.0 | 2.6 | 0.0 | 102.1 | 0.0 | 41.3 | 52.3 | 41.3 |
| **pigment %** | **0.5** | **40** | **16.2** | **20** | **40** | **0** | **1** | **0** | **40** | **0** | **16.2** | **20.5** | **16.2** |
| TCR 3040 Aluminum Paste | 1.6 | 62.6 | 50.7 | 125.2 | 125.2 | 125.2 | 0.0 | 64.2 | 0.0 | 3.1 | 50.7 | 0.0 | 50.7 |
| **pigment %** | **0.5** | **20** | **16.2** | **40** | **40** | **40** | **0** | **20,5** | **0** | **1** | **16.2** | **0** | **16.2** |
| Aluminum Passivator Sol | 0.7 | 26.1 | 21.1 | 52.1 | 52.1 | 52.1 | 0.0 | 26.7 | 0.0 | 1.3 | 21.1 | 0.0 | 21.1 |
| IR Turquoise Tint Paste¹³ | 460.262 | 185.964 | 314.280 | 185.964 | 92.982 | 278.947 | 460.262 | 369.604 | 278.947 | 460.262 | 314.280 | 369.604 | 314.280 |
| **pigment %** | **99** | **40** | **67.6** | **40** | **20** | **60** | **99** | **79.5** | **60** | **99** | **67.6** | **79.5** | **67.6** |
| Deionized water | 1.2 | 70.5 | 38.1 | 70.5 | 94.1 | 47.0 | 1.2 | 24.1 | 47.0 | 1.2 | 38.1 | 24.1 | 38.1 |
| Acrylic Latex Resin Solution | 0.9 | 54.1 | 29.2 | 54.1 | 72.1 | 36.1 | 0.9 | 18.5 | 36.1 | 0.9 | 29.2 | 18.5 | 29.2 |
| Dimethylethanolamine, 50% aqueous | 4.1 | 5.9 | 3.8 | 4.2 | 3.6 | 3.8 | 3.8 | 4.8 | 3.6 | 3.0 | 3.4 | 1.6 | 2.2 |
| Deionized water | 131.6 | 44.5 | 99.9 | 107.9 | 50.5 | 133.5 | 133.6 | 150.5 | 137.2 | 124.6 | 106.1 | 102.2 | 101.5 |
| 25° Hue | 199.04 | 198.27 | 187.10 | 187.91 | 192.91 | 182.90 | 180.64 | 170.32 | 170.06 | 187.19 | 188.47 | 198.70 | 198.08 |
| **Visual Tri**-**coat effect** | **no** | **yes** | **yes** | **no** | **no** | **yes** | **no** | **no** | **yes** | **yes** | **yes** | **no** | **yes** |

| | | | | | | | | | | | | | |
|---|---|---|---|---|---|---|---|---|---|---|---|---|---|
| ¹³ Same as Green Tint Paste but substituting Ferro F5686 Turquoise for Ferro V12650 Green. | | | | | | | | | | | | | |

**Brown Color Space**

| **Ingredients** | **1** | **2** | **3** | **4** | **5** | **6** | **7** | **8** | **9** | **10** | **11** | **12** | **13** |
|---|---|---|---|---|---|---|---|---|---|---|---|---|---|
| Mineral Spirits | 35.718 | 35.718 | 35.718 | 35.718 | 35.718 | 35.718 | 35.718 | 35.718 | 35.718 | 35.718 | 35.718 | 35.718 | 35.718 |
| Deionized water | 240.033 | 240.033 | 240.033 | 240.033 | 240.033 | 240.033 | 240.033 | 240.033 | 240.033 | 240.033 | 240.033 | 240.033 | 240.033 |
| Acrylic Latex Resin Solution | 614.622 | 614.622 | 614.622 | 614.622 | 614.622 | 614.622 | 614.622 | 614.622 | 614.622 | 614.622 | 614.622 | 614.622 | 614.622 |
| Dimethylethanolamine, 50% aqueous | 9.228 | 9.228 | 9.228 | 9.228 | 9.228 | 9.228 | 9.228 | 9.228 | 9.228 | 9.228 | 9.228 | 9.228 | 9.228 |
| CYMEL 385 | 260.452 | 260.452 | 260.452 | 260.452 | 260.452 | 260.452 | 260.452 | 260.452 | 260.452 | 260.452 | 260.452 | 260.452 | 260.452 |
| Acid Functional Polyester Solution | 26.041 | 26.041 | 26.041 | 26.041 | 26.041 | 26.041 | 26.041 | 26.041 | 26.041 | 26.041 | 26.041 | 26.041 | 26.041 |
| N-butoxypropanol | 178.594 | 178.594 | 178.594 | 178.594 | 178.594 | 178.594 | 178.594 | 178.594 | 178.594 | 178.594 | 178.594 | 178.594 | 178.594 |
| UV Absorber | 13.096 | 13.096 | 13.096 | 13.096 | 13.096 | 13.096 | 13.096 | 13.096 | 13.096 | 13.096 | 13.096 | 13.096 | 13.096 |
| Polypropylene Glycol 425 | 71.437 | 71.437 | 71.437 | 71.437 | 71.437 | 71.437 | 71.437 | 71.437 | 71.437 | 71.437 | 71.437 | 71.437 | 71.437 |
| Phosphatized Epoxy | 4.842 | 4.842 | 4.842 | 4.842 | 4.842 | 4.842 | 4.842 | 4.842 | 4.842 | 4.842 | 4.842 | 4.842 | 4.842 |
| Xirallic Fireside Copper F60-50 SW¹⁴ | 1.3 | 102.1 | 41.3 | 51.0 | 102.1 | 0.0 | 2.6 | 0.0 | 102.1 | 0.0 | 41.3 | 52.3 | 41.3 |
| **pigment %** | 0.5 | 40 | 16.2 | 20 | 40 | 0 | 1 | 0 | 40 | 0 | 16.2 | 20.5 | 16.2 |
| TCR 3040 Aluminum Paste | 1.6 | 62.6 | 50.7 | 125.2 | 125.2 | 125.2 | 0.0 | 64.2 | 0.0 | 3.1 | 50.7 | 0.0 | 50.7 |
| **pigment %** | 0.5 | 20 | 16.2 | 40 | 40 | 40 | 0 | 20,5 | 0 | 1 | 16.2 | 0 | 16.2 |
| Aluminum Passivator Sol | 0.7 | 26.1 | 21.1 | 52.1 | 52.1 | 52.1 | 0.0 | 26.7 | 0.0 | 1.3 | 21.1 | 0.0 | 21.1 |
| IR Brown Tint Paste¹⁵ | 460.262 | 185.964 | 314.280 | 185.964 | 92.982 | 278.947 | 460.262 | 369.604 | 278.947 | 460.262 | 314.280 | 369.604 | 314.280 |
| **pigment %** | 99 | 40 | 67.6 | 40 | 20 | 60 | 99 | 79.5 | 60 | 99 | 67.6 | 79.5 | 67.6 |
| Deionized water | 1.2 | 70.5 | 38.1 | 70.5 | 94.1 | 47.0 | 1.2 | 24.1 | 47.0 | 1.2 | 38.1 | 24.1 | 38.1 |
| Acrylic Latex Resin Solution | 0.9 | 54.1 | 29.2 | 54.1 | 72.1 | 36.1 | 0.9 | 18.5 | 36.1 | 0.9 | 29.2 | 18.5 | 29.2 |
| Dimethylethanolamine, 50% aqueous | 1.3 | 1.5 | 2.5 | 2.2 | 2.6 | 2.0 | 1.7 | 3.3 | 2.6 | 1.8 | 3.1 | 1.2 | 2.7 |
| Deionized water | 57.2 | 33.8 | 65.6 | 64.1 | 35.2 | 62.7 | 66.7 | 65.0 | 39.1 | 79.8 | 61.3 | 43.1 | 70.5 |
| 25° Hue | 44.16 | 43.86 | 43.67 | 44.02 | 43.72 | 45.11 | 44.51 | 45.14 | 44.12 | 46.50 | 45.12 | 44.47 | 44.04 |
| **Visual Tri**-**coat effect** | **no** | **no** | **yes** | **yes** | **no** | **yes** | **no** | **yes** | **no** | **no** | **yes** | **no** | **yes** |

| | | | | | | | | | | | | | |
|---|---|---|---|---|---|---|---|---|---|---|---|---|---|
| ¹⁴ TiO₂/SnO₂ layering over aluminum flake; available from Merck. ¹⁵ Same as Green Tint Paste but substituting Ferro 10550 Brown for Ferro V12650 Green. | | | | | | | | | | | | | |

**White Color Space**

| **Ingredients** | **1** | **2** | **3** | **4** | **5** | **6** | **7** | **8** | **9** | **10** | **11** | **12** | **13** |
|---|---|---|---|---|---|---|---|---|---|---|---|---|---|
| Mineral Spirits | 35.718 | 35.718 | 35.718 | 35.718 | 35.718 | 35.718 | 35.718 | 35.718 | 35.718 | 35.718 | 35.718 | 35.718 | 35.718 |
| Deionized water | 240.033 | 240.033 | 240.033 | 240.033 | 240.033 | 240.033 | 240.033 | 240.033 | 240.033 | 240.033 | 240.033 | 240.033 | 240.033 |
| Acrylic Latex Resin Solution | 613.452 | 613.452 | 613.452 | 613.452 | 613.452 | 613.452 | 613.452 | 613.452 | 613.452 | 613.452 | 613.452 | 613.452 | 613.452 |
| Dimethylethanolamine, 50% aqueous | 9.228 | 9.228 | 9.228 | 9.228 | 9.228 | 9.228 | 9.228 | 9.228 | 9.228 | 9.228 | 9.228 | 9.228 | 9.228 |
| CYMEL 385 | 260.452 | 260.452 | 260.452 | 260.452 | 260.452 | 260.452 | 260.452 | 260.452 | 260.452 | 260.452 | 260.452 | 260.452 | 260.452 |
| Acid Functional Polyester Solution | 26.041 | 26.041 | 26.041 | 26.041 | 26.041 | 26.041 | 26.041 | 26.041 | 26.041 | 26.041 | 26.041 | 26.041 | 26.041 |
| N-butoxypropanol | 178.594 | 178.594 | 178.594 | 178.594 | 178.594 | 178.594 | 178.594 | 178.594 | 178.594 | 178.594 | 178.594 | 178.594 | 178.594 |
| UV Absorber | 13.096 | 13.096 | 13.096 | 13.096 | 13.096 | 13.096 | 13.096 | 13.096 | 13.096 | 13.096 | 13.096 | 13.096 | 13.096 |
| Polypropylene Glycol 425 | 71.437 | 71.437 | 71.437 | 71.437 | 71.437 | 71.437 | 71.437 | 71.437 | 71.437 | 71.437 | 71.437 | 71.437 | 71.437 |
| Phosphatized Epoxy | 4.842 | 4.842 | 4.842 | 4.842 | 4.842 | 4.842 | 4.842 | 4.842 | 4.842 | 4.842 | 4.842 | 4.842 | 4.842 |
| Xirallic T60-10 SW Crystal Silver Ext¹⁶ | 1.3 | 102.1 | 41.3 | 51.0 | 102.1 | 0.0 | 2.6 | 0.0 | 102.1 | 0.0 | 41.3 | 52.3 | 41.3 |
| **pigment %** | **0.5** | **40** | **16.2** | **20** | **40** | **0** | **1** | **0** | **40** | **0** | **16.2** | **20.5** | **16.2** |
| TCR 3040 Aluminum Paste | 1.6 | 62.6 | 50.7 | 125.2 | 125.2 | 125.2 | 0.0 | 64.2 | 0.0 | 3.1 | 50.7 | 0.0 | 50.7 |
| **pigment %** | **0.5** | **20** | **16.2** | **40** | **40** | **40** | **0** | **20.5** | **0** | **1** | **16.2** | **0** | **16.2** |
| Aluminum Passivator Sol | 0.7 | 26.1 | 21.1 | 52.1 | 52.1 | 52.1 | 0.0 | 26.7 | 0.0 | 1.3 | 21.1 | 0.0 | 21.1 |
| TiO₂ Tint Paste¹⁷ | 416.101 | 168.122 | 284.126 | 168.122 | 84.061 | 252.182 | 416.101 | 334.142 | 252.182 | 416.101 | 284.126 | 334.142 | 284.126 |
| **pigment %** | **99** | **40** | **67.6** | **40** | **20** | **60** | **99** | **79.5** | **60** | **99** | **67.6** | **79.5** | **67.6** |
| Deionized water | 38.7 | 83.3 | 62.4 | 83.3 | 98.4 | 68.2 | 38.7 | 53.4 | 68.2 | 38.7 | 62.4 | 53.4 | 62.4 |
| Acrylic Latex Resin Solution | 0.9 | 52.5 | 28.3 | 52.5 | 70.0 | 35.0 | 0.9 | 17.9 | 35.0 | 0.9 | 28.3 | 17.9 | 28.3 |
| Dimethylethanolamine, 50% aqueous | 0.9 | 2.4 | 1.5 | 3.5 | 3.6 | 2.3 | 1.5 | 2.2 | 1.3 | 1.7 | 1.8 | 1.6 | 1.9 |
| Deionized water | 39.6 | 25.4 | 44.5 | 57.1 | 45.1 | 60.2 | 43.8 | 73.0 | 0.0 | 45.9 | 46.3 | 24.8 | 47.1 |
| 25° Hue | 154.55 | 141.29 | 229.46 | 214.51 | 190.68 | 204.13 | 216.91 | 237.92 | 232.16 | 205.08 | 207.40 | 149.78 | 136.41 |
| **Visual Tri**-**coat effect** | **no** | **yes** | **yes** | **yes** | **no** | **yes** | **no** | **yes** | **no** | **no** | **yes** | **no** | **yes** |

| | | | | | | | | | | | | | |
|---|---|---|---|---|---|---|---|---|---|---|---|---|---|
| ¹⁶ TiO₂/SnO₂ layering over aluminum flake; available from Merck. ¹⁷ Prepared from grinding TIONA 595 from Millennium, solvents propylene glycol monomethyl ether, N-butoxypropanol, Polypropylene Glycol 425, dipropylene glycol monomethyl ether, mineral spirits, acrylic latex resin solution, deionized water, acrylic grind vehicle and 50% by weight aqueous dimethylethanolamine; weight ratio 252.6/7.0/7.0/9.3/7.5/5.8/33.2/38.0/53.6/2.0. | | | | | | | | | | | | | |

**Blue Color Space**

| **Ingredients** | **1** | **2** | **3** | **4** | **5** | **6** | **7** | **8** | **9** | **10** | **11** | **12** | **13** |
|---|---|---|---|---|---|---|---|---|---|---|---|---|---|
| Mineral Spirits | 35.718 | 35.718 | 35.718 | 35.718 | 35.718 | 35.718 | 35.718 | 35.718 | 35.718 | 35.718 | 35.718 | 35.718 | 35.718 |
| Deionized water | 240.033 | 240.033 | 240.033 | 240.033 | 240.033 | 240.033 | 240.033 | 240.033 | 240.033 | 240.033 | 240.033 | 240.033 | 240.033 |
| Acrylic Latex Resin Solution | 614.622 | 614.622 | 614.622 | 614.622 | 614.622 | 614.622 | 614.622 | 614.622 | 614.622 | 614.622 | 614.622 | 614.622 | 614.622 |
| Dimethylethanolamine, 50% aqueous | 9.228 | 9.228 | 9.228 | 9.228 | 9.228 | 9.228 | 9.228 | 9.228 | 9.228 | 9.228 | 9.228 | 9.228 | 9.228 |
| CYMEL 385 | 260.452 | 260.452 | 260.452 | 260.452 | 260.452 | 260.452 | 260.452 | 260.452 | 260.452 | 260.452 | 260.452 | 260.452 | 260.452 |
| Acid Functional Polyester Solution | 26.041 | 26.041 | 26.041 | 26.041 | 26.041 | 26.041 | 26.041 | 26.041 | 26.041 | 26.041 | 26.041 | 26.041 | 26.041 |
| N-butoxypropanol | 178.594 | 178.594 | 178.594 | 178.594 | 178.594 | 178.594 | 178.594 | 178.594 | 178.594 | 178.594 | 178.594 | 178.594 | 178.594 |
| UV Absorber | 13.096 | 13.096 | 13.096 | 13.096 | 13.096 | 13.096 | 13.096 | 13.096 | 13.096 | 13.096 | 13.096 | 13.096 | 13.096 |
| Polypropylene Glycol 425 | 71.437 | 71.437 | 71.437 | 71.437 | 71.437 | 71.437 | 71.437 | 71.437 | 71.437 | 71.437 | 71.437 | 71.437 | 71.437 |
| Phosphatized Epoxy | 4.842 | 4.842 | 4.842 | 4.842 | 4.842 | 4.842 | 4.842 | 4.842 | 4.842 | 4.842 | 4.842 | 4.842 | 4.842 |
| Xirallic T60-25 SW Cosmic Turquoise¹⁸ | 1.3 | 102.1 | 41.3 | 51.0 | 102.1 | 0.0 | 2.6 | 0.0 | 102.1 | 0.0 | 41.3 | 52.3 | 41.3 |
| **pigment %** | **0.5** | **40** | **16.2** | **20** | **40** | **0** | **1** | **0** | **40** | **0** | **16.2** | **20.5** | **16.2** |
| TCR 3040 Aluminum Paste | 1.6 | 62.6 | 50.7 | 125.2 | 125.2 | 125.2 | 0.0 | 64.2 | 0.0 | 3.1 | 50.7 | 0.0 | 50.7 |
| **pigment %** | **0.5** | **20** | **16.2** | **40** | **40** | **40** | **0** | **20.5** | **0** | **1** | **16.2** | **0** | **16.2** |
| Aluminum Passivator Sol | 0.7 | 26.1 | 21.1 | 52.1 | 52.1 | 52.1 | 0.0 | 26.7 | 0.0 | 1.3 | 21.1 | 0.0 | 21.1 |
| IR Blue Tint Paste¹⁹ | 460.262 | 185.964 | 314.280 | 185.964 | 92.982 | 278.947 | 460.262 | 369.604 | 278.947 | 460.262 | 314.280 | 369.604 | 314.280 |
| **pigment %** | **99** | **40** | **67.6** | **40** | **20** | **60** | **99** | **79.5** | **60** | **99** | **67.6** | **79.5** | **67.6** |
| Deionized water | 1.2 | 70.5 | 38.1 | 70.5 | 94.1 | 47.0 | 1.2 | 24.1 | 47.0 | 1.2 | 38.1 | 24.1 | 38.1 |
| Acrylic Latex Resin Solution | 0.9 | 54.1 | 29.2 | 54.1 | 72.1 | 36.1 | 0.9 | 18.5 | 36.1 | 0.9 | 29.2 | 18.5 | 29.2 |
| Dimethylethanolamine, 50% aqueous | 1.4 | 2.5 | 2.3 | 4.6 | 3.9 | 3.3 | 2.5 | 2.9 | 2.3 | 2.0 | 1.7 | 2.0 | 2.8 |
| Deionized water | 74.0 | 38.7 | 66.8 | 42.7 | 44.7 | 72.4 | 69.1 | 83.1 | 21.3 | 86.7 | 74.1 | 36.6 | 73.0 |
| 25° Hue | 234.50 | 234.30 | 210.10 | 210.20 | 217.26 | 204.52 | 205.53 | 196.13 | 195.70 | 211.82 | 212.74 | 233.14 | 233.30 |
| **Visual Tri**-**coat effect** | **no** | **yes** | **yes** | **yes** | **no** | **yes** | **no** | **no** | **yes** | **no** | **no** | **no** | **yes** |

| | | | | | | | | | | | | | |
|---|---|---|---|---|---|---|---|---|---|---|---|---|---|
| ¹⁸ TiO₂/SnO₂ layering over aluminum flake; available from Merck. ¹⁹ Same as Green Tint Paste but substituting Ferro V9248 Blue for Ferro V12650 Green. | | | | | | | | | | | | | |

**Green Color Space**

| **Ingredients** | **1** | **2** | **3** | **4** | **5** | **6** | **7** | **8** | **9** | **10** | **11** | **12** | **13** |
|---|---|---|---|---|---|---|---|---|---|---|---|---|---|
| Mineral Spirits | 17.859 | 17.859 | 17.859 | 17.859 | 17.859 | 17.859 | 17.859 | 17.859 | 17.859 | 17.859 | 17.859 | 17.859 | 17.859 |
| Deionized water | 120.0165 | 120.0165 | 120.0165 | 120.0165 | 120.0165 | 120.0165 | 120.0165 | 120.0165 | 120.0165 | 120.0165 | 120.0165 | 120.0165 | 120.0165 |
| Acrylic Latex Resin Solution | 307.311 | 307.311 | 307.311 | 307.311 | 307.311 | 307.311 | 307.311 | 307.311 | 307.311 | 307.311 | 307.311 | 307.311 | 307.311 |
| Dimethylethanolamine, 50% aqueous | 4.614 | 4.614 | 4.614 | 4.614 | 4.614 | 4.614 | 4.614 | 4.614 | 4.614 | 4.614 | 4.614 | 4.614 | 4.614 |
| CYMEL 385 | 130.226 | 130.226 | 130.226 | 130.226 | 130.226 | 130.226 | 130.226 | 130.226 | 130.226 | 130.226 | 130.226 | 130.226 | 130.226 |
| Acid Functional Polyester Solution | 13.0205 | 13.0205 | 13.0205 | 13.0205 | 13.0205 | 13.0205 | 13.0205 | 13.0205 | 13.0205 | 13.0205 | 13.0205 | 13.0205 | 13.0205 |
| N-butoxypropanol | 89.297 | 89.297 | 89.297 | 89.297 | 89.297 | 89.297 | 89.297 | 89.297 | 89.297 | 89.297 | 89.297 | 89.297 | 89.297 |
| UV Absorber | 6.548 | 6.548 | 6.548 | 6.548 | 6.548 | 6.548 | 6.548 | 6.548 | 6.548 | 6.548 | 6.548 | 6.548 | 6.548 |
| Polypropylene Glycol 425 | 35.7185 | 35.7185 | 35.7185 | 35.7185 | 35.7185 | 35.7185 | 35.7185 | 35.7185 | 35.7185 | 35.7185 | 35.7185 | 35.7185 | 35.7185 |
| Phosphatized Epoxy | 2.421 | 2.421 | 2.421 | 2.421 | 2.421 | 2.421 | 2.421 | 2.421 | 2.421 | 2.421 | 2.421 | 2.421 | 2.421 |
| METASHINE 2025PSTM²⁰ | 0.7 | 56.7 | 23.0 | 28.3 | 56.7 | 0.0 | 1.4 | 0.0 | 56.7 | 0.0 | 23.0 | 29.1 | 23.0 |
| **pigment %** | **0.5** | **40** | **16.2** | **20** | **40** | **0** | **1** | **0** | **40** | **0** | **16.2** | **20.5** | **16.2** |
| NSG METASHINE GT1030RSJ4²¹ | 0.6 | 25.5 | 20.7 | 51.0 | 51.0 | 51.0 | 0.0 | 26.2 | 0.0 | 1.3 | 20.7 | 0.0 | 20.7 |
| **pigment %** | **0.5** | **20** | **16.2** | **40** | **40** | **40** | **0** | **20.5** | **0** | **1** | **16.2** | **0** | **16.2** |
| IR Green Tint Paste | 230.131 | 92.982 | 157.140 | 92.982 | 46.491 | 139.473 | 230.131 | 184.802 | 139.473 | 230.131 | 157.140 | 184.802 | 157.140 |
| **pigment %** | **99** | **40** | **67.6** | **40** | **20** | **60** | **99** | **79.5** | **60** | **99** | **67.6** | **79.5** | **67.6** |
| Deionized water | 0.7 | 42.9 | 23.2 | 42.9 | 57.2 | 28.6 | 0.7 | 14.7 | 28.6 | 0.7 | 23.2 | 14.7 | 23.2 |
| Acrylic Latex Resin Solution | 0.5 | 27.0 | 14.6 | 27.0 | 36.1 | 18.0 | 0.5 | 9.2 | 18.0 | 0.5 | 14.6 | 9.2 | 14.6 |
| Dimethylethanolamine, 50% aqueous | 4.0 | 3.6 | 3.4 | 3.8 | 3.3 | 4.3 | 3.3 | 3.5 | 3.9 | 3.5 | 3.2 | 3.4 | 3.5 |
| Deionized water | 21.3 | 0.0 | 0.0 | 0.0 | 0.0 | 0.0 | 0.0 | 0.0 | 0.0 | 0.0 | 0.0 | 0.0 | 0.0 |
| 25° Hue | 117.71 | 108.89 | 109.12 | 116.24 | 116.22 | 120.11 | 120.24 | 107.91 | 108.11 | 132.02 | 131.88 | 118.65 | 118.43 |
| **Visual Tri**-**coat effect** | **no** | **no** | **yes** | **no** | **no** | **yes** | **no** | **yes** | **no** | **no** | **yes** | **yes** | **yes** |

| | | | | | | | | | | | | | |
|---|---|---|---|---|---|---|---|---|---|---|---|---|---|
| ²⁰ Silver layering over glass flake; available from Toyo Aluminum K.K. ²¹ TiO₂ coating over glass flake; available from Nippon Sheet Glass Co. | | | | | | | | | | | | | |

Whereas particular embodiments of this invention have been described above for purposes of illustration, it will be evident to those skilled in the art that numerous variations of the details of the present invention may be made without departing from the invention as defined in the appended claims.

## Claims

1. A process for forming a multilayer composite coating on a substrate, comprising:
(a) depositing an opaque coating layer directly over at least a portion of an electrodeposition coating layer and/or a primer-surfacer coating layer by depositing a coating composition comprising:
(i) a resinous binder, and
(ii) a pigment composition, wherein the pigment composition comprises:
(1) colored inorganic pigment particles selected from blue inorganic pigment particles, green inorganic pigment particles, brown inorganic pigment particles, turquoise inorganic pigment particles, and white inorganic pigment particles;
(2) metal and/or metal alloy flake pigment particles; and
(3) interference pigment particles;
(b) optionally, dehydrating the opaque coating layer;
(c) forming a top coating layer over the opaque coating layer by depositing a curable top coating composition which is substantially pigment-free directly onto at least a portion of the opaque coating layer; and
(d) optionally curing the top coating layer and the opaque coating layer simultaneously, wherein the pigment composition comprises:
I
(1) 27 to 67 percent by weight of blue inorganic pigment particles;
(2) up to 40 percent by weight of metal and/or metal alloy flake pigment particles; and
(3) up to 40 percent by weight of interference pigment particles,
wherein the pigment composition comprises at least 8 percent by weight of (2) and/or (3); or
II
(1) 20 to 92.5 percent by weight of green inorganic pigment particles;
(2) up to 40 percent by weight of metal and/or metal alloy flake pigment particles; and
(3) 7.5 up to 40 percent by weight of interference pigment particles; or
III
(1) 43.5 to 94.5 percent by weight of green inorganic pigment particles;
(2) 13.3 to 40 percent by weight of titanium dioxide coated glass flake pigment particles; and/or
(3) 5.5 to 31.4 percent by weight of aluminum coated glass flake pigment particles,
wherein the pigment composition comprises no more than 56.5 percent by weight of (2) and (3) combined; or
IV
(1) 29.3 to 90.3 percent by weight of brown inorganic pigment particles;
(2) 9.5 to 40 percent by weight of metal and/or metal alloy flake pigment particles; and
(3) up to 30.7 percent by weight of interference pigment particles,
wherein the pigment composition comprises at least 9.7 percent by weight of (2) and (3) combined; or
V
(1) 52 to 75 percent by weight of turquoise inorganic pigment particles;
(2) 25 to 40 percent by weight of metal and/or metal alloy flake pigment particles; and
(3) up to 40 percent by weight of interference pigment particles,
wherein the pigment composition comprises at least 34.2 percent by weight of (2) and (3) combined; or
VI
(1) 27 to 88.5 percent by weight of white inorganic pigment particles;
(2) 7.5 to 40 percent by weight of metal and/or metal alloy flake pigment particles; and
(3) up to 31 percent by weight of interference pigment particles,
wherein the pigment composition comprises 11.5 to 74 percent by weight of (2) and (3) combined and
wherein each weight percent is based on the total weight of pigment particles present in the coating composition.

2. The process of claim 1, wherein the coating composition, when deposited over a substrate and cured
- for I, provides a cured coating having a hue angle of 183-235;
- for II, provides a cured coating having a hue angle of 118-158;
- for III, provides a cured coating having a hue angle of 108 to 132;
- for IV, provides a cured coating having a hue angle of 43.7 to 46.8;
- for V, provides a cured coating having a hue angle of 170 to 199;
- for VI, provides a cured coating having a hue angle of 141 to 237 and lightness of 79.6 to 92.5
when measured at a 25° viewing angle using a multi-angle spectrophotometer.

3. The process of claim 1, wherein the sum of (1), (2) and (3) is 100 percent by weight, based on the total weight of pigment particles present in the coating composition.

4. A coating composition comprising a resinous binder and a pigment composition, comprising
(1) colored inorganic pigment particles selected from blue inorganic pigment particles, green inorganic pigment particles, brown inorganic pigment particles, turquoise inorganic pigment particles, and white inorganic pigment particles;
(2) metal and/or metal alloy flake pigment particles; and
(3) interference pigment particles;
wherein the pigment composition is selected from:
(a) a composition comprising:
(i) 27 to 67 percent by weight of blue inorganic pigment particles;
(ii) up to 40 percent by weight of metal and/or metal alloy flake pigment particles; and
(iii) up to 40 percent by weight of interference pigment particles,
wherein the pigment composition comprises at least 8 percent by weight of (ii) and/or (iii); and
wherein each weight percent is based on the total weight of pigment particles present in the coating composition;
(b) a composition comprising:
(i) 20 to 92.5 percent by weight of green inorganic pigment particles;
(ii) up to 40 percent by weight of metal and/or metal alloy flake pigment particles; and
(iii) up to 40 percent by weight of interference pigment particles,
wherein the pigment composition comprises at least 7.5 percent by weight of (iii); and
wherein each weight percent is based on the total weight of pigment particles present in the coating composition;
(c) a composition comprising:
(i) 43.5 to 94.5 percent by weight of green inorganic pigment particles;
(ii) 13.3 to 40 percent by weight of titanium dioxide coated glass flake pigment particles; and/or
(iii) 5.5 to 31.4 percent by weight of aluminum coated glass flake pigment particles,
wherein the pigment composition comprises no more than 56.5 percent by weight of (ii) and (iii) combined, and
wherein each weight percent is based on the total weight of pigment particles present in the coating composition;
(d) a composition comprising:
(i) 29.3 to 90.3 percent by weight of brown inorganic pigment particles;
(ii) 9.5 to 40 percent by weight of metal and/or metal alloy flake pigment particles; and
(iii) up to 30.7 percent by weight of interference pigment particles,
wherein the pigment composition comprises at least 9.7 percent by weight of (ii) and (iii) combined, and
wherein each weight percent is based on the total weight of pigment particles present in the coating composition;
(e) a composition comprising:
(i) 52 to 75 percent by weight of turquoise inorganic pigment particles;
(ii) 25 to 40 percent by weight of metal and/or metal alloy flake pigment particles; and
(iii) up to 40 percent by weight of interference pigment particles,
wherein the pigment composition comprises at least 34.2 percent by weight of (ii) and (iii) combined, and
wherein each weight percent is based on the total weight of pigment particles present in the coating composition; and
(f) a composition comprising:
(i) 27 to 88.5 percent by weight of white inorganic pigment particles;
(ii) 7.5 to 40 percent by weight of metal and/or metal alloy flake pigment particles; and
(iii) up to 31 percent by weight of interference pigment particles,
wherein the pigment composition comprises 11.5 to 74 percent by weight of (ii) and (iii) combined, and
wherein each weight percent is based on the total weight of pigment particles present in the coating composition.

## Patentansprüche

1. Verfahren zur Herstellung einer mehrschichtigen Verbundbeschichtung auf einem Substrat, umfassend:
(a) Aufbringen einer opaken Beschichtungsschicht direkt auf wenigstens einen Teil einer elektrophoretisch abgeschiedenen Beschichtungsschicht und/oder einer Grundierfüllerbeschichtungsschicht durch Aufbringen einer Beschichtungszusammensetzung enthaltend:
(i) ein harzartiges Bindemittel und
(ii) eine Pigmentzusammensetzung, wobei die Pigmentszusammensetzung enthält:
(1) farbige anorganische Pigmentteilchen ausgewählt aus blauen anorganischen Pigmentteilchen, grünen anorganischen Pigmentteilchen, braunen anorganischen Pigmentteilchen, türkisfarbenen anorganischen Pigmentteilchen und weißen anorganischen Pigmentteilchen,
(2) Metall- und/oder Metalllegierungspigmentteilchen in Flockenform und
(3) Interferenzpigmentteilchen,
(b) wahlweise Dehydratisieren der opaken Beschichtungsschicht,
(c) Ausbilden einer Deckbeschichtungsschicht auf der opaken Beschichtungsschicht durch Abscheiden einer härtbaren Deckbeschichtungszusammensetzung, die im Wesentlichen pigmentfrei ist, direkt auf wenigstens einem Teil der opaken Beschichtungsschicht und
(d) wahlweise gleichzeitiges Härten der Deckbeschichtungsschicht und der opaken Beschichtungsschicht,
wobei die Pigmentzusammensetzung enthält:
I
(1) 27 bis 67 Gew.-% von blauen anorganischen Pigmentteilchen,
(2) bis zu 40 Gew.-% von Metall- und/oder Metalllegierungspigmentteilchen in Flockenform und
(3) bis zu 40 Gew.-% von Interferenzpigmentteilchen,
wobei die Pigmentzusammensetzung wenigstens 8 Gew.-% von (2) und/oder (3) enthält, oder
II
(1) 20 bis 92,5 Gew.-% von grünen anorganischen Pigmentteilchen,
(2) bis zu 40 Gew.-% von Metall- und/oder Metalllegierungspigmentteilchen in Flockenform und
(3) 7,5 bis zu 40 Gew.-% von Interferenzpigmentteilchen oder
III
(1) 43,5 bis zu 94,5 Gew.-% von grünen anorganischen Pigmentteilchen,
(2) 13,3 bis 40 Gew.-% von titandioxidbeschichteten Glaspigmentteilchen in Flockenform und/oder
(3) 5,5 bis 31,4 Gew.-% von aluminiumbeschichteten Glaspigmentteilchen in Flockenform,
wobei die Pigmentzusammensetzung nicht mehr als 56,5 Gew.-% von (2) und (3) kombiniert enthält, oder
IV
(1) 29,3 bis 90,3 Gew.-% von braunen anorganischen Pigmentteilchen,
(2) 9,5 bis 40 Gew.-% von Metall- und/oder Metalllegierungspigmentteilchen in Flockenform und
(3) bis zu 30,7 Gew.-% von Interferenzpigmentteilchen,
wobei die Pigmentzusammensetzung mindestens 9,7 Gew.-% von (2) und (3) kombiniert enthält, oder
V
(1) 52 bis 75 Gew.-% von türkisfarbenen anorganischen Pigmentteilchen,
(2) 25 bis 40 Gew.-% von Metall- und/oder Metalllegierungspigmentteilchen in Flockenform und
(3) bis zu 40 Gew.-% von Interferenzpigmentteilchen,
wobei die Pigmentzusammensetzung mindestens 34,2 Gew.-% von (2) und (3) kombiniert enthält, oder
VI
(1) 27 bis 88,5 Gew.-% von weißen anorganischen Pigmentteilchen,
(2) 7,5 bis 40 Gew.-% von Metall- und/oder Metalllegierungspigmentteilchen in Flockenform und
(3) bis zu 31 Gew.-% Interferenzpigmentteilchen,
wobei die Pigmentzusammensetzung 11,5 bis 74 Gew.-% von (2) und (3) kombiniert enthält und
wobei jede Gewichtsprozentangabe auf das Gesamtgewicht von Pigmentteilchen, die in der Beschichtungszusammensetzung vorhanden sind, bezogen ist.

2. Verfahren nach Anspruch 1, wobei die Beschichtungszusammensetzung, wenn auf einem Substrat aufgebracht und gehärtet,
- für I eine gehärtete Beschichtung mit einem Farbtonwinkel von 183 bis 235 ergibt,
- für II eine gehärtete Beschichtung mit einem Farbtonwinkel von 118 bis 158 ergibt,
- für III eine gehärtete Beschichtung mit einem Farbtonwinkel von 108 bis 132 ergibt,
- für IV eine gehärtete Beschichtung mit einem Farbtonwinkel von 43,7 bis 46,8 ergibt,
- für V eine gehärtete Beschichtung mit einem Farbtonwinkel von 170 bis 199 ergibt,
- für VI eine gehärtete Beschichtung mit einem Farbtonwinkel von 141 bis 237 und einer Helligkeit von 79,6 bis 92,5 ergibt,
wenn bei einem 25°-Betrachtungswinkel unter Verwendung eines Mehrfachwinkelspektrometers gemessen.

3. Verfahren nach Anspruch 1, wobei die Summe von (1), (2) und (3) 100 Gew.-% ergibt, bezogen auf das Gesamtgewicht der Pigmentteilchen, die in der Beschichtungszusammensetzung vorhanden sind.

4. Beschichtungszusammensetzung enthaltend ein harzartiges Bindemittel und eine Pigmentzusammensetzung enthaltend:
(1) farbige anorganische Pigmentteilchen ausgewählt aus blauen anorganischen Pigmentteilchen, grünen anorganischen Pigmentteilchen, braunen anorganischen Pigmentteilchen, türkisfarbenen anorganischen Pigmentteilchen und weißen anorganischen Pigmentteilchen,
(2) Metall- und/oder Metalllegierungspigmentteilchen in Flockenform und
(3) Interferenzpigmentteilchen,
wobei die Pigmentzusammensetzung ausgewählt ist aus
(a) einer Zusammensetzung enthaltend:
(i) 27 bis 67 Gew.-% von blauen anorganischen Pigmentteilchen,
(ii) bis zu 40 Gew.-% von Metall- und/oder Metalllegierungspigmentteilchen in Flockenform und
(iii) bis zu 40 Gew.-% von Interferenzpigmentteilchen,
wobei die Pigmentzusammensetzung wenigstens 8 Gew.-% von (ii) und/oder (iii) enthält und
wobei jede Gewichtsprozentangabe bezogen ist auf das Gesamtgewicht der Pigmentteilchen, die in der Beschichtungszusammensetzung vorhanden sind,
(b) einer Zusammensetzung enthaltend:
(i) 20 bis 92,5 Gew.-% von grünen anorganischen Pigmentteilchen,
(ii) bis zu 40 Gew.-% von Metall- und/oder Metalllegierungspigmentteilchen in Flockenform und
(iii) bis zu 40 Gew.-% von Interferenzpigmentteilchen,
wobei die Pigmentzusammensetzung mindestens 7,5 Gew.-% von (iii) enthält und
wobei jede Gewichtsprozentangabe bezogen ist auf das Gesamtgewicht der Pigmentteilchen, die in der Beschichtungszusammensetzung vorhanden sind,
(c) einer Zusammensetzung enthaltend:
(i) 43,5 bis zu 94,5 Gew.-% von grünen anorganischen Pigmentteilchen,
(ii) 13,3 bis 40 Gew.-% von titandioxidbeschichteten Glaspigmentteilchen in Flockenform und/oder
(iii) 5,5 bis 31,4 Gew.-% von aluminiumbeschichteten Glaspigmentteilchen in Flockenform,
wobei die Pigmentzusammensetzung nicht mehr als 56,5 Gew.-% von (2) und (3) kombiniert enthält und
(d) einer Zusammensetzung enthaltend:
(i) 29,3 bis 90,3 Gew.-% von braunen anorganischen Pigmentteilchen,
(ii) 9,5 bis 40 Gew.-% von Metall- und/oder Metalllegierungspigmentteilchen in Flockenform und
(iii) bis zu 30,7 Gew.-% von Interferenzpigmentteilchen,
wobei die Pigmentzusammensetzung mindestens 9,7 Gew.-% von (ii) und (iii) kombiniert enthält und
wobei jede Gewichtsprozentangabe bezogen ist auf das Gesamtgewicht der Pigmentteilchen, die in der Beschichtungszusammensetzung vorhanden sind und
(e) einer Zusammensetzung enthaltend:
(i) 52 bis 75 Gew.-% von türkisfarbenen anorganischen Pigmentteilchen,
(ii) 25 bis 40 Gew.-% von Metall- und/oder Metalllegierungspigmentteilchen in Flockenform und
(iii) bis zu 40 Gew.-% von Interferenzpigmentteilchen,
wobei die Pigmentzusammensetzung mindestens 34,2 Gew.-% von (ii) und (iii) kombiniert enthält und
wobei jede Gewichtsprozentangabe bezogen ist auf das Gesamtgewicht der Pigmentteilchen, die in der Beschichtungszusammensetzung vorhanden sind und
(f) einer Zusammensetzung enthaltend:
(i) 27 bis 88,5 Gew.-% von weißen anorganischen Pigmentteilchen,
(ii) 7,5 bis 40 Gew.-% von Metall- und/oder Metalllegierungspigmentteilchen in Flockenform und
(iii) bis zu 31 Gew.-% Interferenzpigmentteilchen,
wobei die Pigmentzusammensetzung 11,5 bis 74 Gew.-% von (ii) und (iii) kombiniert enthält und
wobei jede Gewichtsprozentangabe bezogen ist auf das Gesamtgewicht der Pigmentteilchen, die in der Beschichtungszusammensetzung vorhanden sind.

## Revendications

1. Procédé de formation d'un revêtement composite multicouche sur un substrat, comportant les étapes suivantes :
a) déposer une couche de revêtement opaque, directement sur au moins une partie d'une couche de revêtement électro-déposée et/ou une couche de revêtement primaire-surfaceur, en déposant une composition de revêtement comprenant
i) un liant résineux,
ii) et une composition de pigments, laquelle composition de pigments comprend :
1) des particules de pigment inorganique coloré, choisies parmi des particules de pigment inorganique bleu, des particules de pigment inorganique vert, des particules de pigment inorganique brun, des particules de pigment inorganique turquoise, et des particules de pigment inorganique blanc,
2) des particules de pigment en paillettes de métal et/ou d'alliage métallique,
3) et des particules de pigment interférentiel ;
b) en option, déshydrater la couche de revêtement opaque ;
c) former une couche de revêtement de dessus, par-dessus la couche de revêtement opaque, en déposant une composition durcissable de revêtement de dessus, qui ne contient pratiquement pas de pigments, directement sur au moins une partie de la couche de revêtement opaque ;
d) et en option, faire durcir simultanément la couche de revêtement opaque et la couche de revêtement de dessus ;
dans lequel la composition de pigments comprend :
I
(1) de 27 à 67 % en poids de particules de pigment inorganique bleu,
(2) jusqu'à 40 % en poids de particules de pigment en paillettes de métal et/ou d'alliage métallique,
(3) et jusqu'à 40 % en poids de particules de pigment interférentiel, étant entendu que cette composition de pigments comprend au moins 8 % en poids de particules (2) et/ou (3) ;
ou bien
II
(1) de 20 à 92,5 % en poids de particules de pigment inorganique vert,
(2) jusqu'à 40 % en poids de particules de pigment en paillettes de métal et/ou d'alliage métallique,
(3) et de 7,5 à 40 % en poids de particules de pigment interférentiel ;
ou bien
III
(1) de 43,5 à 94,5 % en poids de particules de pigment inorganique vert,
(2) de 13,3 à 40 % en poids de particules de pigment en paillettes de verre enrobées de dioxyde de titane,
(3) et/ou de 5,5 à 31,4 % en poids de particules de pigment en paillettes de verre enrobées d'aluminium,
étant entendu que cette composition de pigments ne comprend pas plus de 56,5 % en poids, en tout, de particules (2) et (3) ;
ou bien
IV
(1) de 29,3 à 90,3 % en poids de particules de pigment inorganique brun,
(2) de 9,5 à 40 % en poids de particules de pigment en paillettes de métal et/ou d'alliage métallique,
(3) et jusqu'à 30,7 % en poids de particules de pigment interférentiel,
étant entendu que cette composition de pigments comprend au moins 9,7 % en poids, en tout, de particules (2) et (3) ;
ou bien
V O
(1) de 52 à 75 % en poids de particules de pigment inorganique turquoise,
(2) de 25 à 40 % en poids de particules de pigment en paillettes de métal et/ou d'alliage métallique,
(3) et jusqu'à 40 % en poids de particules de pigment interférentiel, étant entendu que cette composition de pigments comprend au moins 34,2 % en poids, en tout, de particules (2) et (3) ;
ou bien
VI
(1) de 27 à 88,5 % en poids de particules de pigment inorganique blanc,
(2) de 7,5 à 40 % en poids de particules de pigment en paillettes de métal et/ou d'alliage métallique,
(3) et jusqu'à 31 % en poids de particules de pigment interférentiel, étant entendu que cette composition de pigments comprend de 11,5 à 74 % en poids, en tout, de particules (2) et (3) ;
et étant entendu que chaque pourcentage en poids est rapporté au poids total des particules de pigment présentes dans la composition de revêtement.

2. Procédé conforme à la revendication 1, dans lequel la composition de revêtement, une fois déposée sur un substrat et durcie, donne :
- dans le cas I, un revêtement dur dont l'angle de teinte vaut de 183° à 235° ;
- dans le cas II, un revêtement dur dont l'angle de teinte vaut de 118° à 158° ;
- dans le cas III, un revêtement dur dont l'angle de teinte vaut de 108° à 132° ;
- dans le cas IV, un revêtement dur dont l'angle de teinte vaut de 43,7° à 46,8° ;
- dans le cas V, un revêtement dur dont l'angle de teinte vaut de 170° à 199° ;
- dans le cas VI, un revêtement dur dont l'angle de teinte vaut de 141° à 237° et dont la luminosité vaut de 79,6 à 92,5 ;
ces paramètres étant mesurés sous un angle de vue de 25° au moyen d'un spectrophotomètre multi-angle.

3. Procédé conforme à la revendication 1, dans lequel les particules (1), (2) et (3) font en tout 100 %, en poids rapporté au poids total des particules de pigment présentes dans la composition de revêtement.

4. Composition de revêtement, comprenant un liant résineux et une composition de pigments qui comprend :
1) des particules de pigment inorganique coloré, choisies parmi des particules de pigment inorganique bleu, des particules de pigment inorganique vert, des particules de pigment inorganique brun, des particules de pigment inorganique turquoise, et des particules de pigment inorganique blanc,
2) des particules de pigment en paillettes de métal et/ou d'alliage métallique,
3) et des particules de pigment interférentiel,
et pour laquelle la composition de pigments est choisie parmi :
a) une composition comprenant :
i) de 27 à 67 % en poids de particules de pigment inorganique bleu,
ii) jusqu'à 40 % en poids de particules de pigment en paillettes de métal et/ou d'alliage métallique,
iii) et jusqu'à 40 % en poids de particules de pigment interférentiel,
étant entendu que cette composition de pigments comprend au moins 8 % en poids de particules (ii) et/ou (iii),
et étant entendu que chaque pourcentage en poids est rapporté au poids total des particules de pigment présentes dans la composition de revêtement ;
b) une composition comprenant :
i) de 20 à 92,5 % en poids de particules de pigment inorganique vert,
ii) jusqu'à 40 % en poids de particules de pigment en paillettes de métal et/ou d'alliage métallique,
iii) et jusqu'à 40 % en poids de particules de pigment interférentiel,
étant entendu que cette composition de pigments comprend au moins 7,5 % en poids de particules (iii),
et étant entendu que chaque pourcentage en poids est rapporté au poids total des particules de pigment présentes dans la composition de revêtement ;
c) une composition comprenant :
i) de 43,5 à 94,5 % en poids de particules de pigment inorganique vert,
ii) de 13,3 à 40 % en poids de particules de pigment en paillettes de verre enrobées de dioxyde de titane,
iii) et/ou de 5,5 à 31,4 % en poids de particules de pigment en paillettes de verre enrobées d'aluminium,
étant entendu que cette composition de pigments ne comprend pas plus de 56,5 % en poids, en tout, de particules (ii) et (iii),
et étant entendu que chaque pourcentage en poids est rapporté au poids total des particules de pigment présentes dans la composition de revêtement ;
d) une composition comprenant :
i) de 29,3 à 90,3 % en poids de particules de pigment inorganique brun,
ii) de 9,5 à 40 % en poids de particules de pigment en paillettes de métal et/ou d'alliage métallique,
iii) et jusqu'à 30,7 % en poids de particules de pigment interférentiel,
étant entendu que cette composition de pigments comprend au moins 9,7 % en poids, en tout, de particules (ii) et (iii),
et étant entendu que chaque pourcentage en poids est rapporté au poids total des particules de pigment présentes dans la composition de revêtement ;
e) une composition comprenant :
i) de 52 à 75 % en poids de particules de pigment inorganique turquoise,
ii) de 25 à 40 % en poids de particules de pigment en paillettes de métal et/ou d'alliage métallique,
iii) et jusqu'à 40 % en poids de particules de pigment interférentiel,
étant entendu que cette composition de pigments comprend au moins 34,2 % en poids, en tout, de particules (ii) et (iii),
et étant entendu que chaque pourcentage en poids est rapporté au poids total des particules de pigment présentes dans la composition de revêtement ;
f) et une composition comprenant :
i) de 27 à 88,5 % en poids de particules de pigment inorganique blanc,
ii) de 7,5 à 40 % en poids de particules de pigment en paillettes de métal et/ou d'alliage métallique,
iii) et jusqu'à 31 % en poids de particules de pigment interférentiel,
étant entendu que cette composition de pigments comprend de 11,5 à 74 % en poids, en tout, de particules (ii) et (iii),
et étant entendu que chaque pourcentage en poids est rapporté au poids total des particules de pigment présentes dans la composition de revêtement.
